(19) Europäisches Patentamt / European Patent Office / Office européen des brevets

(11) **EP 3 436 865 B1**

(12) **EUROPEAN PATENT SPECIFICATION**

(45) Date of publication and mention
of the grant of the patent:
**18.06.2025 Bulletin 2025/25**

(21) Application number: **17776847.0**

(22) Date of filing: **31.03.2017**

(51) International Patent Classification (IPC):
*G06V 10/75* (2022.01)   *G06V 20/69* (2022.01)
*G06V 30/40* (2022.01)   *G06V 10/44* (2022.01)
*G06V 30/414* (2022.01)   *G06V 30/418* (2022.01)

(52) Cooperative Patent Classification (CPC):
**G06V 10/44; G06V 10/757; G06V 30/40;
G06V 30/414; G06V 30/418;** G06V 10/247

(86) International application number:
**PCT/US2017/025553**

(87) International publication number:
**WO 2017/173368 (05.10.2017 Gazette 2017/40)**

(54) **CONTENT-BASED DETECTION AND THREE DIMENSIONAL GEOMETRIC RECONSTRUCTION OF OBJECTS IN IMAGE AND VIDEO DATA**

INHALTSBASIERTE DETEKTION UND DREIDIMENSIONALE GEOMETRISCHE REKONSTRUKTION VON OBJEKTEN IN BILD- UND VIDEODATEN

DÉTECTION À BASE DE CONTENU ET RECONSTRUCTION GÉOMÉTRIQUE TRIDIMENSIONNELLE D'OBJETS DANS DES DONNÉES D'IMAGE ET VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2016  US 201662317360 P
11.08.2016  US 201615234969
11.08.2016  US 201615234993**

(43) Date of publication of application:
**06.02.2019 Bulletin 2019/06**

(73) Proprietor: **TUNGSTEN AUTOMATION
CORPORATION
Irvine, CA 92618 (US)**

(72) Inventors:
• **MA, Jiyong
San Diego
CA 92127 (US)**
• **THOMPSON, Stephen, M.
Oceanside
CA 92504 (US)**
• **AMTRUP, Jan W.
Silver Spring
MD 20910 (US)**

(74) Representative: **Murgitroyd & Company
165-169 Scotland Street
Glasgow G5 8PL (GB)**

(56) References cited:
**US-A1- 2014 032 406     US-A1- 2016 019 530
US-B1- 8 805 125**

• SZELISKI R: "Computer Vision: Algorithms and Applications", 18 August 2009 (2009-08-18), pages 1 - 979, XP002631475, Retrieved from the Internet <URL:http://szeliski.org/Book/drafts/SzeliskiBook_20100903_draft.pdf>

EP 3 436 865 B1

**Description**

PRIORITY CLAIM

This application is an International Application of U.S. Patent Application No. 15/234,969, filed on August 11, 2016, which claims priority to U.S. Provisional Patent Application No. 62/317,360, filed on April, 01, 2016. This application is also related to, and claims the benefit of priority from, U.S. Patent Application No. 15/234,993, filed concurrently with U.S. Patent Application No. 15/234,969 on August 11, 2016 and which also claims priority to U.S. Provisional Patent Application No. 62/317,360.

RELATED APPLICATIONS

This application is related to copending U.S. Patent Application Nos. 15/157,325 (filed March May 17, 2016); 14/818,196 (filed August 4, 2015); 14/981,759 (filed December 28, 2015); and 14/932,902 (filed November 4, 2015).

FIELD OF INVENTION

The present invention relates to digital image data capture and processing, and more particularly to detecting objects being documents depicted in image and/or video data based on internally-represented features (content) as opposed to edges. The present invention also relates to reconstructing objects in a three-dimensional coordinate space so as to rectify image artifacts caused by distortional effects inherent to capturing image and/or video data using a camera.

BACKGROUND OF THE INVENTION

Digital images having depicted therein a document such as a letter, a check, a bill, an invoice, a credit card, a driver license, a passport, a social security card, etc. have conventionally been captured and processed using a scanner or multifunction peripheral coupled to a computer workstation such as a laptop or desktop computer. Methods and systems capable of performing such capture and processing are well known in the art and well adapted to the tasks for which they are employed.

However, in an era where day-to-day activities, computing, and business are increasingly performed using mobile devices, it would be greatly beneficial to provide analogous document capture and processing systems and methods for deployment and use on mobile platforms, such as smart phones, digital cameras, tablet computers, etc.

A major challenge in transitioning conventional document capture and processing techniques is the limited processing power and image resolution achievable using hardware currently available in mobile devices. These limitations present a significant challenge because it is impossible or impractical to process images captured at resolutions typically much lower than achievable by a conventional scanner. As a result, conventional scanner-based processing algorithms typically perform poorly on digital images captured using a mobile device.

In addition, the limited processing and memory available on mobile devices makes conventional image processing algorithms employed for scanners prohibitively expensive in terms of computational cost. Attempting to process a conventional scanner-based image processing algorithm takes far too much time to be a practical application on modern mobile platforms.

A still further challenge is presented by the nature of mobile capture components (e.g. cameras on mobile phones, tablets, etc.). Where conventional scanners are capable of faithfully representing the physical document in a digital image, critically maintaining aspect ratio, dimensions, and shape of the physical document in the digital image, mobile capture components are frequently incapable of producing such results.

Specifically, images of documents captured by a camera present a new line of processing issues not encountered when dealing with images captured by a scanner. This is in part due to the inherent differences in the way the document image is acquired, as well as the way the devices are constructed. The way that some scanners work is to use a transport mechanism that creates a relative movement between paper and a linear array of sensors. These sensors create pixel values of the document as it moves by, and the sequence of these captured pixel values forms an image. Accordingly, there is generally a horizontal or vertical consistency up to the noise in the sensor itself, and it is the same sensor that provides all the pixels in the line.

In contrast, cameras have many more sensors in a nonlinear array, e.g., typically arranged in a rectangle. Thus, all of these individual sensors are independent, and render image data that is not typically of horizontal or vertical consistency. In addition, cameras introduce a projective effect that is a function of the angle at which the picture is taken. For example, with a linear array like in a scanner, even if the transport of the paper is not perfectly orthogonal to the alignment of sensors and some skew is introduced, there is no projective effect like in a camera. Additionally, with camera capture, nonlinear distortions may be introduced because of the camera optics.

Distortions and blur are particularly challenging when attempting to detect objects represented in video data, as the camera typically moves with respect to the object during the capture operation, and video data are typically characterized by a relatively low resolution compared to still images captured using a mobile device. Moreover, the motion of the camera may be erratic and occur within three dimensions, meaning the horizontal and/or vertical consistency associated with linear motion in a conventional scanner is not present in video data captured using mobile devices. Accordingly, reconstructing an object to correct for distortions, e.g. due to changing camera angle and/or position, within a three-dimensional space is a significant challenge.

Further still, as mobile applications increasingly rely on or leverage image data to provide useful services to customers, e.g. mobile banking, shopping, applying for services such as loans, opening accounts, authenticating identity, acquiring or renewing licenses, etc., capturing relevant information within image data is a desirable capability. However, often the detection of objects within the mobile image data is a challenging task, particularly where the object's edges may be missing, obscured, etc. within the captured image/video data. Since conventional detection techniques rely on detecting objects by locating edges of the object (i.e. boundaries between the object, typically referred to as the image "foreground" and the background of the image or video), missing or obscured object edges present an additional obstacle to consistent and accurate object detection.

In view of the challenges presented above, it would be beneficial to provide an image capture and processing algorithm and applications thereof that compensate for and/or correct problems associated with using a mobile device to capture and/or detect objects within image and/or video data, and reconstruct such objects within a three-dimensional coordinate space.

Published US patent application 2014/032406 A1 discloses systems and method for capturing and processing mages using a mobile device. Optimization and enhancement of image capture and processing are provided on the mobile device to improve an initial quality of the captured image and to provide the user with real time feedback. The image is sent from the mobile device to a remote server, where additional image processing is performed to improve the quality of the image and to extract relevant data from the image.

Richard Szeliski, "Computer Vision: Algorithms and Applications", September 3, 2010 draft, © 2010 Springer, New York, XP002631475, discloses methods for feature detection and matching.

## SUMMARY OF THE INVENTION

According to an aspect of the present disclosure, there is provided a computer-implemented method for using a mobile device to detect a document depicted in a digital image, the method comprising the features of claim 1.

According to another aspect of the present disclosure, there is provided a computer program product for detecting a document depicted in a digital image, the computer program product comprising the features of claim 12.

According to another aspect of the present disclosure, there is provided a system for detecting a document depicted in a digital image, the system comprising the features of claim 13.

Other aspects and embodiments of the invention will be appreciated based on reviewing the following descriptions in full detail.

## BRIEF DESCRIPTION OF THE DRAWINGS

FIG. **1** illustrates a network architecture, in accordance with one inventive concept.

FIG. **2** shows a representative hardware environment that may be associated with the servers and/or clients of FIG. **1,** in accordance with one inventive concept.

FIG. **3A** is a digital image of a document including a plurality of designated feature zones, according to one inventive concept.

FIG. **3B** is a digital image of a document including a plurality of designated identifying features, according to one inventive concept.

FIG. **3C** is a digital image of a document including an extended set of the plurality of designated identifying features, according to another inventive concept.

FIG. **4A** depicts a mapping between matching distinctive features of a reference image and test image of a driver license, according to one inventive concept.

FIG. **4B** depicts a mapping between matching distinctive features of a reference image and test image of a driver license, according to another inventive concept where the test and reference images depict the driver license at different rotational orientations.

FIG. **4C** depicts a mapping between matching distinctive features of a reference image and test image of a credit card, according to one inventive concept.

FIG. **5** is a simplified schematic of a credit card having edges thereof projected based on internal features of the credit card, according to one inventive concept.

FIG. **6A** is a simplified schematic showing a coordinate system for measuring capture angle, according to one inventive concept.

FIG. **6B** depicts an exemplary schematic of a rectangular object captured using a capture angle normal to the object, according to one inventive concept.

FIG. **6C** depicts an exemplary schematic of a rectangular object captured using a capture angle slightly skewed with respect to the object, according to one inventive concept.

FIG. **6D** depicts an exemplary schematic of a rectangular object captured using a capture angle significantly skewed with respect to the object, according to one inventive concept.

FIG. **7** is a flowchart of a method for detecting objects depicted in digital images based on internal features of the object, according to one inventive concept.

FIG. **8** is a flowchart of a method for reconstructing objects depicted in digital images based on internal features of the object, according to one inventive concept.

DETAILED DESCRIPTION

The following description is made for the purpose of illustrating the general principles of the present invention and is not meant to limit the inventive concepts claimed herein. Further, particular features described herein can be used in combination with other described features in each of the various possible combinations and permutations.

Unless otherwise specifically defined herein, all terms are to be given their broadest possible interpretation including meanings implied from the specification as well as meanings understood by those skilled in the art and/or as defined in dictionaries, treatises, etc.

It must also be noted that, as used in the specification and the appended claims, the singular forms "a," "an" and "the" include plural referents unless otherwise specified.

The present application refers to image processing. In particular, the present application discloses systems, methods, and computer program products configured to detect and reconstruct objects depicted in digital images from a non-rectangular shape to a substantially rectangular shape, or preferably a rectangular shape. Even more preferably, this is accomplished based on evaluating the internal features of the object(s) rather than detecting object edges and reconstructing a particular shape based on edge contours.

According to one embodiment, a computer-implemented method of detecting an object depicted in a digital image includes: detecting a plurality of identifying features of the object, wherein the plurality of identifying features are located internally with respect to the object; and projecting a location of one or more edges of the object based at least in part on the plurality of identifying features.

According to another embodiment, a computer program product for detecting an object depicted in a digital image includes a computer readable medium having stored thereon computer readable program instructions configured to cause a processor, upon execution thereof, to: detect, using the processor, a plurality of identifying features of the object, wherein the plurality of identifying features are located internally with respect to the object; and project, using the processor, a location of one or more edges of the object based at least in part on the plurality of identifying features.

According to yet another embodiment, a system for detecting an object depicted in a digital image includes a processor and logic embodied with and/or executable by the processor. The logic is configured to cause the processor, upon execution thereof, to: detect a plurality of identifying features of the object, wherein the plurality of identifying features are located internally with respect to the object; and project a location of one or more edges of the object based at least in part on the plurality of identifying features.

The following definitions will be useful in understanding the inventive concepts described herein, according to various inventive concepts. The following definitions are to be considered exemplary, and are offered for purposes of illustration to provide additional clarity to the present disclosures, but should not be deemed limiting on the scope of the inventive concepts disclosed herein.

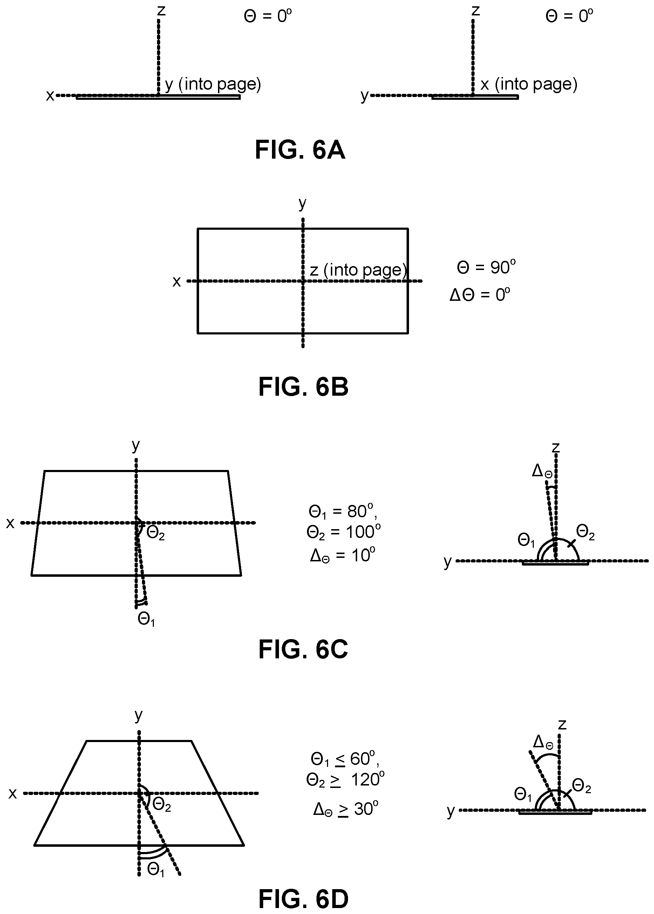

As referred to henceforth, a "quadrilateral" is a four-sided figure where (1) each side is linear, and (2) adjacent sides form vertices at the intersection thereof. Exemplary quadrilaterals are depicted in FIGS. **6C** and **6D** below, according to two illustrative inventive concepts.

A "parallelogram" is a special type of quadrilateral, i.e. a four-sided figure where (1) each side is linear, (2) opposite sides are parallel, and (3) adjacent sides are not necessarily perpendicular, such that vertices at the intersection of adjacent sides form angles having values that are not necessarily 90°.

A "rectangle" or "rectangular shape" is a special type of quadrilateral, which is defined as a four-sided figure, where (1) each side is linear, (2) opposite sides are parallel, and (3) adjacent sides are perpendicular, such that an interior angle formed at the vertex between each pair of adjacent sides is a right-angle, i.e. a 90° angle. An exemplary rectangle is depicted in FIG. **6B,** according to one illustrative inventive concept.

Moreover, as referred-to herein "rectangles" and "rectangular shapes" are considered to include "substantially rectangular shapes", which are defined as a four-sided shape where (1) each side is predominantly linear (e.g. at least 90%, 95%, or 99% of each side's length, in various inventive concepts, is characterized by a first-order polynomial (such as $y = mx + b$), (2) each pair of adjacent sides form an interior angle having a value $\theta$, where $\theta$ is approximately 90° (e.g. $\theta$ satisfies the relationship: $85° \leq \theta \leq 95°$)) at either (a) a vertex between two adjacent sides, (b) a vertex between a projection of the predominantly linear portion of one side and an adjacent side, or (c) a vertex between a projection of the predominantly linear portion of one side and a projection of the predominantly linear portion of an adjacent side.

A "non-rectangular shape" as referred to herein includes any shape that is not either a "rectangular shape" or a "substantially rectangular shape" as defined above. In preferred inventive concepts, a "non-rectangular shape" is a "tetragon," which as referred to herein is a four-sided figure, where: (1) each side is characterized in whole or in part by an equation selected from a chosen class of functions (e.g. selected from a class of polynomials preferably ranging from zeroth order to fifth order, more preferably first order to third order polynomials, and even more preferably first order to second order polynomials), and (2) adjacent sides of the figure form vertices at the intersection thereof.

Images (e.g. pictures, figures, graphical schematics, single frames of movies, videos, films, clips, etc.) are preferably digital images captured by cameras, especially cameras of mobile devices. As understood herein, a mobile device is any device capable of receiving data without having power supplied via a physical connection (e.g. wire, cord, cable, etc.) and capable of receiving data without a physical data connection (e.g. wire, cord, cable, etc.). Mobile devices within the scope of the present disclosures include exemplary devices such as a mobile telephone, smartphone, tablet, personal digital assistant, iPod ®, iPad ®, BLACKBERRY ® device, etc.

However, as it will become apparent from the descriptions of various functionalities, the presently disclosed mobile image processing algorithms can be applied, sometimes with certain modifications, to images coming from scanners and multifunction peripherals (MFPs). Similarly, images processed using the presently disclosed processing algorithms may be further processed using conventional scanner processing algorithms, in some approaches.

Of course, the various embodiments and inventive concepts set forth herein may be implemented utilizing hardware, software, or any desired combination thereof. For that matter, any type of logic may be utilized which is capable of implementing the various functionality set forth herein.

One benefit of using a mobile device is that with a data plan, image processing and information processing based on captured images can be done in a much more convenient, streamlined and integrated way than previous methods that relied on presence of a scanner. However, the use of mobile devices as document(s) capture and/or processing devices has heretofore been considered unfeasible for a variety of reasons.

In one approach, an image may be captured by a camera of a mobile device. The term "camera" should be broadly interpreted to include any type of device capable of capturing an image of a physical object external to the device, such as a piece of paper. The term "camera" does not encompass a peripheral scanner or multifunction device. Any type of camera may be used. Preferred inventive concepts may use cameras having a higher resolution, e.g. 8 MP or more, ideally 12 MP or more. The image may be captured in color, grayscale, black and white, or with any other known optical effect. The term "image" as referred to herein is meant to encompass any type of data corresponding to the output of the camera, including raw data, processed data, etc.

The description herein is presented to enable any person skilled in the art to make and use the invention and is provided in the context of particular applications of the invention and their requirements. Various modifications to the disclosed inventive concepts will be readily apparent to those skilled in the art and the general principles defined herein may be applied to other inventive concepts and applications without departing from the scope of the present invention, as defined in the appended claims. Thus, the present invention is not intended to be limited to the inventive concepts shown, but is to be accorded the widest scope consistent with the principles and features disclosed herein.

**General Computing and Networking Concepts**

In particular, various inventive concepts of the invention discussed herein are implemented using the Internet as a means of communicating among a plurality of computer systems. One skilled in the art will recognize that the present invention is not limited to the use of the Internet as a communication medium and that alternative methods of the invention may accommodate the use of a private intranet, a Local Area Network (LAN), a Wide Area Network (WAN) or other means of communication. In addition, various combinations of wired, wireless (e.g., radio frequency) and optical communication links may be utilized.

The program environment in which one inventive concept of the invention may be executed illustratively incorporates one or more general-purpose computers or special-purpose devices such hand-held computers. Details of such devices (e.g., processor, memory, data storage, input and output devices) are well known and are omitted for the sake of clarity.

It should also be understood that the techniques of the present invention might be implemented using a variety of technologies. For example, the methods described herein may be implemented in software running on a computer system, or implemented in hardware utilizing one or more processors and logic (hardware and/or software) for performing operations of the method, application specific integrated circuits, programmable logic devices such as Field Programmable Gate Arrays (FPGAs), and/or various combinations thereof. In one illustrative approach, methods described herein may be implemented by a series of computer-executable instructions residing on a storage medium such as a physical (e.g., non-transitory) computer-readable medium. In addition, although specific inventive concepts of the invention may employ object-oriented software programming concepts, the invention is not so limited and is easily adapted to employ other forms of directing the operation of a computer.

The invention can also be provided in the form of a computer program product comprising a computer readable storage or signal medium having computer code thereon, which may be executed by a computing device (e.g., a processor) and/or system. A computer readable storage medium can include any medium capable of storing computer code thereon for use by a computing device or system, including optical media such as read only and writeable CD and DVD, magnetic memory or medium (e.g., hard disk drive, tape), semiconductor memory (e.g., FLASH memory and other portable memory cards, etc.), firmware encoded in a chip, etc.

A computer readable signal medium is one that does not fit within the aforementioned storage medium class. For example, illustrative computer readable signal media communicate or otherwise transfer transitory signals within a system, between systems e.g., via a physical or virtual network, etc.

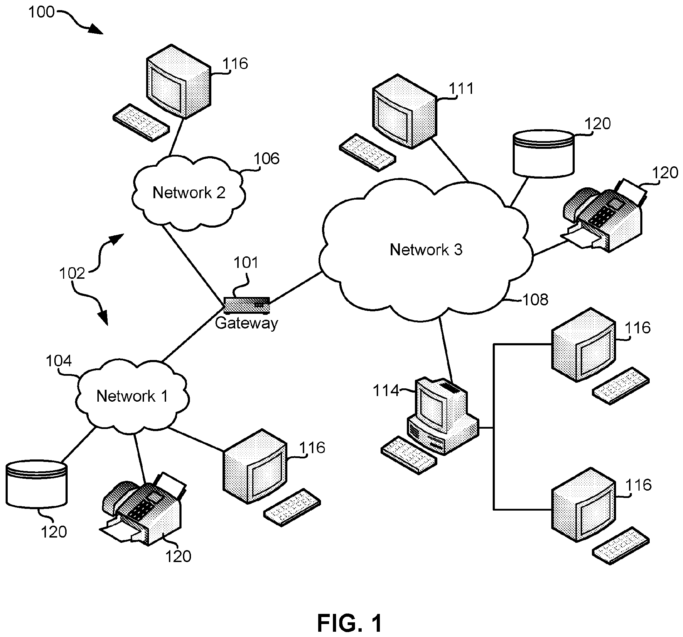

FIG. **1** illustrates an architecture **100,** in accordance with one inventive concept. As shown in FIG. **1,** a plurality of remote networks **102** are provided including a first remote network **104** and a second remote network **106.** A gateway **101** may be coupled between the remote networks **102** and a proximate network **108.** In the context of the present network architecture **100,** the networks **104, 106** may each take any form including, but not limited to a LAN, a WAN such as the Internet, public switched telephone network (PSTN), internal telephone network, etc.

In use, the gateway **101** serves as an entrance point from the remote networks **102** to the proximate network **108.** As such, the gateway **101** may function as a router, which is capable of directing a given packet of data that arrives at the gateway **101,** and a switch, which furnishes the actual path in and out of the gateway **101** for a given packet.

Further included is at least one data server **114** coupled to the proximate network **108,** and which is accessible from the remote networks **102** via the gateway **101.** It should be noted that the data server(s) **114** may include any type of computing device/groupware. Coupled to each data server **114** is a plurality of user devices **116.** Such user devices **116** may include a desktop computer, laptop computer, hand-held computer, printer or any other type of logic. It should be noted that a user device **111** may also be directly coupled to any of the networks, in one inventive concept.

A peripheral **120** or series of peripherals **120,** e.g. facsimile machines, printers, networked storage units, etc., may be coupled to one or more of the networks **104, 106, 108.** It should be noted that databases, servers, and/or additional components may be utilized with, or integrated into, any type of network element coupled to the networks **104, 106, 108.** In the context of the present description, a network element may refer to any component of a network.

According to some approaches, methods and systems described herein may be implemented with and/or on virtual systems and/or systems which emulate one or more other systems, such as a UNIX system which emulates a MAC OS environment, a UNIX system which virtually hosts a MICROSOFT WINDOWS environment, a MICROSOFT WINDOWS system which emulates a MAC OS environment, etc. This virtualization and/or emulation may be enhanced through the use of VMWARE software, in some inventive concepts.

In more approaches, one or more networks **104, 106, 108,** may represent a cluster of systems commonly referred to as a "cloud." In cloud computing, shared resources, such as processing power, peripherals, software, data processing and/or storage, servers, etc., are provided to any system in the cloud, preferably in an on-demand relationship, thereby allowing access and distribution of services across many computing systems. Cloud computing typically involves an Internet or other high speed connection (e.g., 4G LTE, fiber optic, etc.) between the systems operating in the cloud, but other techniques of connecting the systems may also be used. FIG. **1** illustrates an architecture **100,** in accordance with one inventive concept. As shown in FIG. **1,** a plurality of remote networks **102** are provided including a first remote network **104** and a second remote network **106.** A gateway **101** may be coupled between the remote networks **102** and a proximate network **108.** In the context of the present architecture **100,** the networks **104, 106** may each take any form including, but not limited to a LAN, a WAN such as the Internet, public switched telephone network (PSTN), internal telephone network, etc.

In use, the gateway **101** serves as an entrance point from the remote networks **102** to the proximate network **108.** As such, the gateway **101** may function as a router, which is capable of directing a given packet of data that arrives at the gateway **101,** and a switch, which furnishes the actual path in and out of the gateway **101** for a given packet.

Further included is at least one data server **114** coupled to the proximate network **108,** and which is accessible from the remote networks **102** via the gateway **101.** It should be noted that the data server(s) **114** may include any type of computing device/groupware. Coupled to each data server **114** is a plurality of user devices **116.** Such user devices **116** may include a desktop computer, lap-top computer, hand-held computer, printer or any other type of logic. It should be noted that a user device **111** may also be directly coupled to any of the networks, in one inventive concept.

A peripheral **120** or series of peripherals **120,** e.g., facsimile machines, printers, networked and/or local storage units or systems, etc., may be coupled to one or more of the networks **104, 106, 108.** It should be noted that databases and/or additional components may be utilized with, or integrated into, any type of network element coupled to the networks **104, 106, 108.** In the context of the present description, a network element may refer to any component of a network.

According to some approaches, methods and systems described herein may be implemented with and/or on virtual systems and/or systems which emulate one or more other systems, such as a UNIX system which emulates a MAC OS environment, a UNIX system which virtually hosts a MICROSOFT WINDOWS environment, a MICROSOFT WINDOWS system which emulates a MAC OS environment, etc. This virtualization and/or emulation may be enhanced through the use of VMWARE software, in some inventive concepts.

In more approaches, one or more networks **104, 106, 108,** may represent a cluster of systems commonly referred to as a "cloud." In cloud computing, shared resources, such as processing power, peripherals, software, data processing and/or storage, servers, etc., are provided to any system in the cloud, preferably in an on-demand relationship, thereby allowing access and distribution of services across many computing systems. Cloud computing typically involves an Internet or other high speed connection (e.g., 4G LTE, fiber optic, etc.) between the systems operating in the cloud, but other techniques of connecting the systems may also be used.

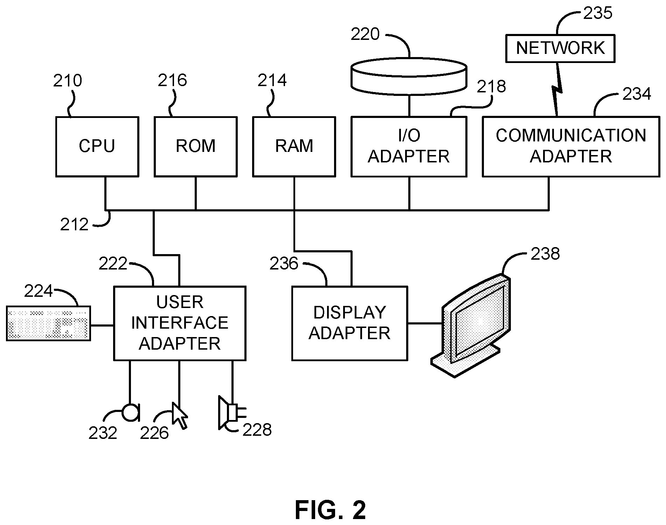

FIG. 2 shows a representative hardware environment associated with a user device **116** and/or server **114** of FIG. **1,** in accordance with one inventive concept. Such figure illustrates a typical hardware configuration of a workstation having a central processing unit **210,** such as a microprocessor, and a number of other units interconnected via a system bus **212.**

The workstation shown in FIG. **2** includes a Random Access Memory (RAM) **214,** Read Only Memory (ROM) **216,** an I/O adapter **218** for connecting peripheral devices such as disk storage units **220** to the bus **212,** a user interface adapter **222** for connecting a keyboard **224,** a mouse **226,** a speaker **228,** a microphone **232,** and/or other user interface devices such as a touch screen and a digital camera (not shown) to the bus **212,** communication adapter **234** for connecting the workstation to a communication network **235** (e.g., a data processing network) and a display adapter **236** for connecting the bus **212** to a display device **238.**

The workstation may have resident thereon an operating system such as the Microsoft Windows® Operating System (OS), a MAC OS, a UNIX OS, etc. It will be appreciated that a preferred inventive concept may also be implemented on platforms and operating systems other than those mentioned. A preferred inventive concept may be written using JAVA, XML, C, and/or C++ language, or other programming languages, along with an object oriented programming methodology. Object oriented programming (OOP), which has become increasingly used to develop complex applications, may be used.


**Mobile Image Capture**


Various inventive concepts of a Mobile Image Capture and Processing algorithm, as well as several mobile applications configured to facilitate use of such algorithmic processing within the scope of the present disclosures are described below. It is to be appreciated that each section below describes functionalities that may be employed in any combination with those disclosed in other sections, including any or up to all the functionalities described herein. Moreover, functionalities of the processing algorithm inventive concepts as well as the mobile application inventive concepts may be combined and/or distributed in any manner across a variety of computing resources and/or systems, in several approaches.

An application is installed on the mobile device, e.g., stored in a nonvolatile memory of the device. In one approach, the application includes instructions to perform processing of an image on the mobile device. In another approach, the application includes instructions to send the image to one or more non-mobile devices, e.g. a remote server such as a network server, a remote workstation, a cloud computing environment, etc. as would be understood by one having ordinary skill in the art upon reading the present descriptions. In yet another approach, the application may include instructions to decide whether to perform some or all processing on the mobile device and/or send the image to the remote site. Examples of how an image may be processed are presented in more detail below.

In one inventive concept, there may be no difference between the processing that may be performed on the mobile device and a remote server, other than speed of processing, constraints on memory available, etc. Moreover, there may be some or no difference between various user interfaces presented on a mobile device, e.g. as part of a mobile application, and corresponding user interfaces presented on a display in communication with the non-mobile device.

In other inventive concepts, a remote server may have higher processing power, more capabilities, more processing algorithms, etc. In yet further inventive concepts, the mobile device may have no image processing capability associated with the application, other than that required to send the image to the remote server. In yet another inventive concept, the remote server may have no image processing capability relevant to the platforms presented herein, other than that required to receive the processed image from the remote server. Accordingly, the image may be processed partially or entirely on the mobile device, and/or partially or entirely on a remote server, and/or partially or entirely in a cloud, and/or partially or entirely in any part of the overall architecture in between. Moreover, some processing steps may be duplicated on different devices.

Which device performs which parts of the processing may be defined by a user, may be predetermined, may be determined on the fly, etc. Moreover, some processing steps may be re-performed, e.g., upon receiving a request from the user. Accordingly, the raw image data, partially processed image data, or fully processed image data may be transmitted from the mobile device, e.g., using a wireless data network, to a remote system. Image data as processed at a remote system may be returned to the mobile device for output and/or further processing.

In a further approach, the image may be partitioned, and the processing of the various parts may be allocated to various devices, e.g., 1/2 to the mobile device and 1/2 to the remote server, after which the processed halves are combined.

In one inventive concept, selection of which device performs the processing may be based at least in part on a relative speed of processing locally on the mobile device vs. communication with the server.

In one approach, a library of processing functions may be present, and the application on the mobile device or the application on a remote server simply makes calls to this library, and essentially the meaning of the calls defines what kind of processing to perform. The device then performs that processing and outputs the processed image, perhaps with some corresponding metadata.

Any type of image processing known in the art and/or as newly presented herein may be performed in any combination in various inventive concepts.

Referring now to illustrative image processing, the camera can be considered an area sensor that captures images, where the images may have any number of projective effects, and sometimes non-linear effects. The image may be processed to correct for such effects. Moreover, the position and boundaries of the document(s) in the image may be found during the processing, e.g., the boundaries of one or more actual pages of paper in the background surrounding the page(s). Because of the mobile nature of various inventive concepts, the sheet of paper may be lying on just about anything. This complicates image analysis in comparison to processing images of documents produced using a scanner, because scanner background properties are constant and typically known, whereas mobile capture backgrounds may vary almost infinitely according to the location of the document and the corresponding surrounding textures captured in the image background, as well as because of variable lighting conditions.

Accordingly, the non-uniformity of the background of the surface on which the piece of paper may be positioned for capture by the camera presents one challenge, and the non-linear and projective effects present additional challenges. Various inventive concepts overcome these challenges, as will soon become apparent.

In one exemplary mode of operation, an application on the mobile device may be initiated, e.g., in response to a user request to open the application. For example, a user-selection of an icon representing the application may be detected.

In some approaches, a user authentication may be requested and/or performed. For example, a user ID and password, or any other authentication information, may be requested and/or received from the user.

In further approaches, various tasks may be enabled via a graphical user interface of the application. For example, a list of tasks may be presented. In such case, a selection of one of the tasks by the user may be detected, and additional options may be presented to the user, a predefined task may be initiated, the camera may be initiated, etc.

### Content-Based Object Detection

An image may be captured by the camera of the mobile device, preferably upon receiving some type of user input such as detecting a tap on a screen of the mobile device, depression of a button on the mobile device, a voice command, a gesture, etc. Another possible scenario may involve some level of analysis of sequential frames, e.g. from a video stream. Sequential frame analysis may be followed by a switch to capturing a single high-resolution image frame, which may be triggered automatically or by a user, in some approaches. Moreover, the trigger may be based on information received from one or more mobile device sensors. For example, in one inventive concept an accelerometer in or coupled to the mobile device may indicate a stability of the camera, and the application may analyze low-resolution video frame(s) for presence of an object of interest. If an object is detected, the application may perform a focusing operation and acquire a high-resolution image of the detected object. Either the low- or high-resolution image may be further processed, but preferred inventive concepts utilize the high-resolution image for subsequent processing.

In more approaches, switching to single frame mode as discussed above may be unnecessary, particularly for smaller objects, in particular documents such as business cards, receipts, credit cards, identification documents such as driver licenses and passports, etc. To increase processing rate and reduce consumption of processing resources, object type identification may facilitate determining whether or not to switch to single frame mode and/or capture a high-resolution image for processing.

As noted above, conventional techniques for detecting objects in image and/or video data generally rely on detecting the edges of the object, i.e. transitions between the background and foreground (which depicts the object) of the image or video data. For instance, edges may be detected based on locating one or more lines (e.g. four lines intersecting to form corners of a substantially rectangular object such as a document) of pixels characterized by a sharp transition in pixel intensity between the background and foreground.

However, where edges are missing or obscured, the conventional edge detection approach is not reasonably accurate or consistent in detecting objects within image and/or video data. Similar challenges exist in images where the object for which detection is desired is set against a complex background (e.g. a photograph or environmental scene) since detecting sharp transitions in intensity is likely to generate many false positive predictions of the location of the object. Accordingly, a new approach is presented via the inventive concepts disclosed herein, and this inventive approach advantageously does not rely on detecting object edges to accomplish object detection within the image and/or video data.

In particular, the presently disclosed inventive concepts include using features of the object other than the edges, e.g. content depicted within a document, to serve as identifying characteristics from which object detection may be accomplished. While the present descriptions set forth several exemplary inventive concepts of object detection primarily with reference to features of documents, it should be understood that these concepts are equally applicable to nearly any type of object, and the techniques discussed herein may be utilized to detect nearly any type of object for which a suitable set of identifying features are present across various exemplars of that object type.

Turning now to exemplary inventive concepts in which the detected object is a document, e.g. a form, a passport, a driver license, a credit card, a business card, a check, a receipt etc., and consistent with the notion that identifying features should be present across various (preferably all) exemplars of a particular document type, content that is common to documents of that type may serve as a suitable identifying feature. In some approaches, edges of the detected object may be cut off, obscured, or otherwise not identifiable within the image. Indeed, the presently disclosed inventive concepts offer the particular advantage that detection of objects may be accomplished independent of whether object edges are identifiable within the image data. Accordingly, the presently disclosed inventive concepts effectuate an improvement to systems configured for object recognition/detection within image data.

In some approaches, when the object or document is known to depict particular content in a particular location, e.g. a barcode, MICR characters for a check, MRZ characters on passports and certain types of identifying documents, etc., then these reference content may be employed to facilitate detecting the object within image and/or video data. In many cases, reference content position and/or content is defined by some sort of standard. In various inventive concepts, it is accordingly advantageous to leverage a priori knowledge regarding the location, size, orientation, etc. of reference content within an image to project the location of document edges based on the reference content as depicted in the image and/or video data.

However, not all objects include such reference content. Accordingly, in more inventive concepts, content such as internal lines, symbols (e.g. small images like icons which preferably contain rich texture information, for instance, for a fingerprint, the ridge pattern, especially, the cross points of two lines, etc.), text characters, etc. which appears on substantially all documents of a particular type is eligible for use as an identifying feature. According to the present descriptions, such content may also be referred to as "boilerplate content."

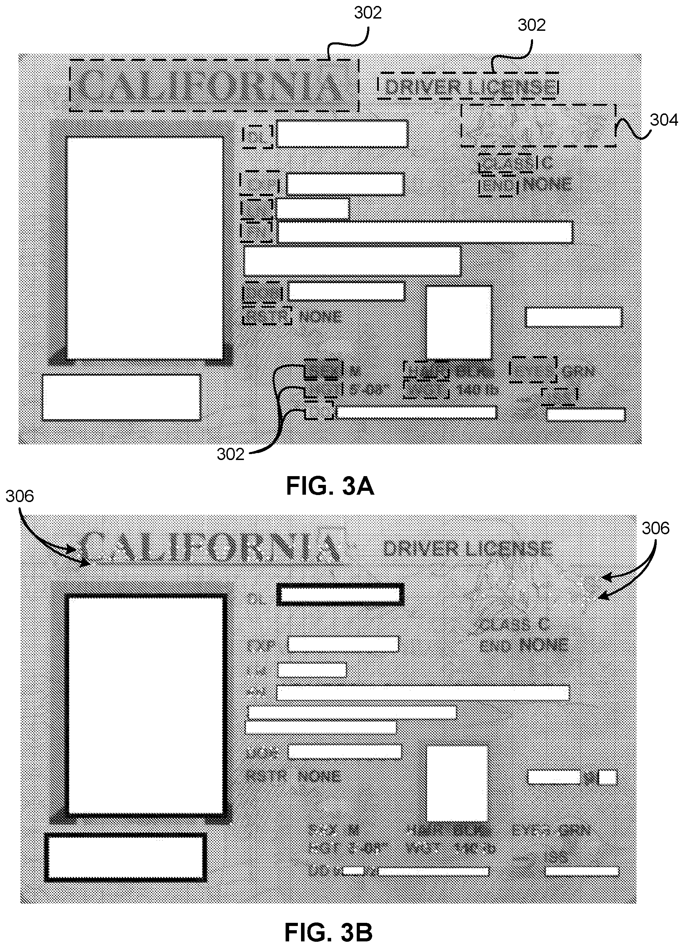

Boilerplate content may be determined manually, e.g. based on a user defining particular feature zones within a reference image, in some approaches. For instance, a user may define particular regions such as those designated in FIG. **3A** by dashed-line bounding boxes. In a particularly preferred approach, the particular regions defined by the user may include a subset of the regions shown in FIG. **3A,** most preferably those regions exhibiting a shading within the bounding box (e.g. for a California driver license, state name "CALIFORNIA," expiration date "EXP," first name "FN," last name "LN," date of birth "DOB," sex "SEX," height "HGT," eye color "EYES," weight "WGT," and document discriminator "DD" field designators). In various approaches, the feature zones may include boilerplate text, e.g. regions **302** and/or non-textual identifying features such as logos, lines, intersecting lines, shapes, holograms, designs, drawings, etc. such as represented in region **304** of FIG. **3A,** according to one inventive concept.

Upon reading the present descriptions, skilled artisans will appreciate that the portions of the document obscured by white rectangles are redactions to protect sensitive information, and should not be considered feature zones within the scope of the presently disclosed inventive concepts. Indeed, by way of contrast to the boilerplate content referenced and shown above, the content redacted from FIG. **3A** varies from driver license to driver license, and therefore is not suitable for designating or locating identifying features common to all (or most) driver licenses for a particular state.

Variable content may therefore be understood as any content that is not boilerplate content, and commonly includes text and photographic features of a document. According to preferred inventive concepts, content-based detection and reconstruction of objects within image data as disclosed herein is based on boilerplate content, and not based on variable content.

Although the exemplary inventive concept shown in FIG. **3A** is a driver license, this is merely illustrative of the type of feature zones that may be designated by a user for purposes of locating and leveraging identifying features as described herein. In other document types, any equivalent text, especially field designators, may be utilized.

For instance on credit or debit cards a region depicting a name of the issuing entity (e.g. VISA, Bank of America, etc.) may be a suitable feature zone, or a region depicting a logo corresponding to the issuing entity, a portion of the card background, a portion of the card depicting a chip (e.g. for a smartcard, an EMV or other equivalent chip), etc. as would be understood by a person having ordinary skill in the art upon reading the present descriptions.

For checks, suitable feature zones may include field designators such as the "MEMO" region of the check, Payee designator "PAY TO THE ORDER OF," boilerplate text such as bank name or address, etc. Similarly, a region including borders of the bounding box designating the numerical payment amount for the check may be a suitable feature zone, in more inventive concepts.

Similarly, for identification documents such as government-issued IDs including social security cards, driver licenses, passports, etc. feature zones may include field designators that appear on the respective type of identification document, may include text such as the document title (e.g. "United States of America," "Passport," "Social Security," etc.), may include a seal, watermark, logo, hologram, symbol, etc. depicted on the identifying document, or other suitable static information depicted on a same location and in a same manner on documents of the same type.

For forms, again field designators are exemplary feature zones suitable for locating identifying features, as well as lines (particularly intersecting lines or lines forming a vertex), boxes, etc. as would be understood by a person having ordinary skill in the art upon reading the present descriptions.

Preferably, the feature zones defined by the user are defined within a reference image, i.e. an image representing the object according to a preferred or desired capture angle, zoom level, object orientation, and most preferably omitting background textures. Advantageously, defining the feature zones in a reference image significantly reduces the amount of training data necessary to accomplish efficient, accurate, and precise object detection and three-dimensional reconstruction. Indeed, it is possible to utilize a single training example such as shown in FIG. **3A** in various inventive concepts. Reconstruction shall be discussed in further detail below.

To determine identifying features within the feature zones, or within the image as a whole, a feature vector-based approach is preferably implemented. As understood herein, a feature vector is a n-dimensional vector representing characteristics of a pixel within digital image and/or video data. The feature vector may include information representative of the pixel intensity in one or more color channels, pixel brightness, etc. as would be understood by a person having ordinary skill in the art upon reading the present descriptions.

Identifying features are characterized by a pixel in a small window of pixels (e.g. 8x8, 15x15, or other suitable value which may be configured based on image resolution) exhibiting a sharp transition in intensity. The identifying features are determined based on analyzing the feature vectors of pixels in the small window, also referred to herein as a "patch." Frequently, these patches are located in regions including connected components (e.g. characters, lines, etc.) exhibiting a bend or intersection, e.g. as illustrated in FIG. **3B** via identifying features **306** (white dots).

Of course, identifying features and/or feature zones may also be determined automatically without departing from the scope of the presently disclosed inventive concepts, but it should be noted that such approaches generally require significantly more training examples than approaches in which feature zones are defined manually in a reference image. Automatically identifying feature zones may also result in a series of identifying features **306** as shown in FIG. **3B,** in some approaches.

The aim of automatic feature zone discovery is to find feature points without manually labeling. For instance, in one exemplary inventive concept automatically identifying feature zones may include one or more of the following features and/or operations.

In one approach, the algorithm of selecting feature points involves two passes. The first pass of the algorithm includes: pair matching, designation of matching points; determining the set of most frequently used matching points; and selecting the best image index.

Pair matching may involve assuming a set of cropped images, for instance, assume a set of ten cropped images denoted by $c_1, c_2, c_3,...c_{10}$, where at least one image is a reference image. From the assumed set, form a set of image pairs preferably including the reference as one of the images in each image pair. For instance if $c_1$ is used as the reference image, image pairs may include $(c_1, c2), (c_1, c3) ... (c_1, c_{10})$. In addition, for each pair $(c_1, c_k)$ (k=2...10) pair matching includes finding matching key points between the images, e.g. as described above.

Designating matching points may involve denoting the set of matching points appearing in image $c_1$ as $S_k$, i.e., the set $S_k$ includes the set of points in image $c_1$ that match to their corresponding points in image $c_k$. Designating matching points may also involve denoting the set of matching points in image $c_k$ that correspond to the matching points in $S_k$ as the set $T_k$.

Finding the most frequently used points $S_k$ (k=2, 3...10) may, in turn, include the following. For each point in $\{S_k\}$ (k=2, 3...10), compute the frequency with which the point is used in $\{S_k\}$. If the frequency is above a threshold, for example, 35%, the point is labeled as a "most frequently used" point. In this way, the set of "most frequently used" points in image $c_1$ may be determined, and this set of points is preferably used as the "automatically selected" feature points in image $c_1$. The first pass of the automatic feature identification algorithm may also include denoting the selected most commonly used points for image $c_k$, as $m_k$.

Selecting the best image, in various approaches, may include determining the image with the best image index, i.e. the image exhibiting the maximum value of $m_k$ (k=1, 2 ...10) among images $c_1, c_2, ... c_{10}$.

FIG. **3B** shows exemplary points **306** automatically selected by implementing the above algorithm, according to one inventive concept.

However, in some approaches the above algorithm may generate feature point sets that are more conservative, which means that although the precision may be high, the recall may be low. Low recall can be problematic when attempting to match images with a small number of identifying features, superimposed against a particularly complex background, etc. as would be understood by a person having ordinary skill in the art upon reading the present disclosures. Accordingly, in some approaches the automatic feature discovery process may include a second pass aimed at increasing recall of feature point selection.

In a preferred inventive concept, the second pass may proceed as follows. Without loss of any generality, suppose that the best image index is 1, that $m_1$ has the maximum value among different values of $m_k$ (k=1, 2..10), and that this image index represents an undesirably low recall rate. Accordingly, to improve recall, extend the set $m_1$ by adding more selected feature points in image c1. The added features may be characterized by a frequency less than the frequency threshold mentioned above with regard to the first pass, in some inventive concepts.

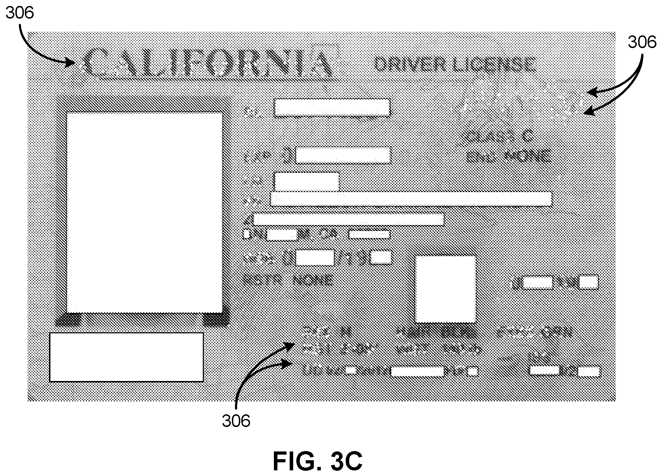

Note that the points in the set $m_k$ belongs to image $c_k$. For each $m_k$ (k=2...10), find the corresponding matching points in $c_1$. Denote as the set of corresponding feature point as $v_k$ for each $m_k$ where (k=2, 3...10). The final extended set of selected feature points for image $c_1$ may be defined as the union of $m_1$, $v_2$, $v_3$... and $v_{10}$. The extended set of selected feature points is shown in FIG. **3C,** according to one inventive concept. Compared with FIG. **3B,** the result shown in FIG. **3C** contains more feature points, reflecting the improved recall of the second pass.

It should be noted that, in some approaches, automatic feature zone discovery may be characterized by a systematic bias when operating on cropped images. When observing the layout of text zones or texture zones in different cropped images of the same object, or objects in the same category, there are often variations in layout. There are about 4% to 7% relative changes in locations between different images. The reason for these variations was not only varying angles or 3D distortions, but also due to error inherent to the manufacturing process. In other words, the locations of particular features often are printed at different positions, so that even a scanned image of two different objects of the same type could exhibit some shift in feature location and/or appearance.

The above problem means the generated models may contain systematic bias. In preferred approaches, it is therefore advantageous to implement an algorithm to compensate for such bias. For instance, the bias may be estimated by the mean value of point shifts in different pair images. For instance, if $c_1$ is the best selected image. The average value of point shift between each pair image $(c_1, c_2)$, $(c_1, c_3)$...$(c_1, c_{10})$ is estimated as the bias. Using this approach, it is possible to account for bias inherent in the automatic feature zone discovery process as described herein.

Feature vectors may be defined using a suitable algorithm, and in one inventive concept a Binary Robust Independent Elementary Feature (BRIEF) is one suitable method to define a feature vector or descriptor for a pixel in an image. BRIEF uses grayscale image data as input, but in various inventive concepts other color depth input image data, and/or other feature vector defining techniques, may be utilized without departing from the scope of the present descriptions.

In one inventive concept, the first step in this algorithm is to remove noise from the input image. This may be accomplished using a low-pass filter to remove high frequency noise, in one approach.

The second step is the selection of a set of pixel pairs in the image patch around a pixel. For instance, in various approaches pixel pairs may include immediately adjacent pixels in one or more of four cardinal directions (up, down, left, and right) and/or diagonally adjacent pixels.

The third step is the comparison of image intensities of each pixel pair. For instance, for a pair of pixels $(p, q)$, if the intensity at pixel $p$ is less than that at pixel $q$, the comparison result is 1. Otherwise, the result of the comparison is 0. These comparison operations are applied to all selected pixel pairs, and a feature vector for this image patch is generated by concatenating these 0/1 values in a string.

Assuming a patch comprising 64 pixels, the patch feature vector can have a length of 128, 256, 512, etc. in various approaches and depending on the nature of the comparison operations. In a preferred inventive concept, the feature vector of the patch has a length of 256, e.g. for a patch comprising a square 8 pixels long on each side and in which four comparisons are performed for each pixel in the patch (left, right, upper and lower neighbor pixels).

A patch descriptor is a representation of a feature vector at a pixel in an image. The shape of a patch around a pixel is usually square or rectangular, but any suitable shape may be employed in various contexts or applications, without departing from the scope of the presently disclosed inventive concepts.

In some inventive concepts, and as noted above the value of each element in a feature vector descriptive of the patch is either 1 or 0, in which case the descriptor is a binary descriptor. Binary descriptors can be represented by a string of values, or a "descriptor string."

As described herein, a descriptor string is analogous to a word in natural language. It can also be called a "visual word." Similarly, an image is analogous to a document which is characterized by including a particular set of visual words. These visual words include features that are helpful for tasks such as image alignment and image recognition. For instance, for image alignment, if there are distinctive visual words in two images, aligning the images based on matching the visual words is easier than attempting to align the images *de novo.*

The distance between two descriptor strings can be measured by an edit distance or a Hamming distance, in alternative inventive concepts. Determining distance is a useful indicator of whether two different images, e.g. a reference image and a test image, depict similar content at particular positions. Thus, two images with very small distance between descriptor strings corresponding to identifying features of the respective images are likely to match, especially if the spatial distribution of the proximate identifying features is preserved between the images.

In the original implementation of a BRIEF descriptor algorithm for defining patch feature vectors, there are no patch orientations, which means that the descriptor is not rotation invariant. However, patch orientations are important to generate patch descriptors which are invariant to image rotations. Accordingly, in preferred approaches the feature vector, e.g. BRIEF descriptors, are enhanced with patch orientations which can be estimated using patch momentum. Patch momentum may be analyzed using any suitable technique that would be understood by a person having ordinary skill in the art upon reading the present disclosures.

In one inventive concept, an "oriented Features from Accelerated Segment Test (FAST) and rotated BRIEF" (ORB) algorithm may be employed to enhance descriptors with orientation information. After getting the patch orientations, each descriptor is normalized by rotating the image patch with the estimated rotation angle.

As noted above regarding FIGS. **3A-3C,** the image includes one or more identifying features **306,** which are characterized by a sharp transition in pixel intensity within a patch. Accordingly, the position of these identifying features **306** (which may also be considered distinctive visual words or key points) is determined.

Key point selection includes finding pixels in an image that have distinctive visual features. These pixels with distinctive features are at positions where image intensities change rapidly, such as corners, stars, etc. Theoretically speaking, every pixel in an image can be selected as a key point. However, there may be millions of pixels in an image, and using all pixels in image matching is very computationally intensive, without providing a corresponding improvement to accuracy. Therefore, distinctive pixels, which are characterized by being in a patch exhibiting a rapid change in pixel intensity, are a suitable set of identifying features with which to accurately match images while maintaining reasonable computational efficiency. In one inventive concept, a FAST (Features from Accelerated Segment Test) algorithm may be implemented to select key points in image data and/or video data.

In various approaches, image descriptors that are described in the previous sections are not scale invariant. Therefore, the scale of a training image and a testing image should be the same in order to find the best match. For a reference image, *a priori* knowledge regarding the physical size of the object and image resolution may be available. In such inventive concepts, it is possible and advantageous to estimate the DPI in the reference image. Notably, in some approaches using a high resolution (e.g. 1920x1080 or greater, 200 DPI or greater) training image may produce too many key points which will slow down image matching process.

In order to optimize the matching time and accuracy, an appropriate reduced DPI level of image/video data is used, in some approaches. Accordingly, for high resolution training images, it is beneficial to scale down to a smaller image resolution, e.g. with a specific DPI level. For instance, the reduced DPI level is 180 in one inventive concept determined to function well in matching images of driver licenses, credit cards, business cards, and other similar documents.

For a test image, the DPI of an object to be detected or matched is generally not known. In order to account for this potential variation, it is useful to define a range that the actual image/video data resolution may reasonably fall within. In one inventive concept, this may be accomplished substantially as follows. The range of resolution values may be quantized with a set of values, in some approaches. For instance, if the resolution range is in a search interval $(a, b),$ where $a$ and $b$ are minimum and maximum DPI values respectively, then the interval $(a, b)$ are divided into a set of sub intervals. The test image is scaled down to a set of images with different, but all reduced, resolutions, and each re-scaled image is matched to the training image. The best match found indicates the appropriate downscaling level.

The detail of a matching algorithm, according to one inventive concept, is as follows. For each resolution in the search interval: a test image is scaled down to the resolution used in the reference image. A brute-force matching approach may be employed to identify the matching points between the reference image and test image. The key points in the reference image are matched against some, or preferably all, key points identified in the testing image. First, the best match for each key point both in the reference image and test image is identified by comparing the distance ratio of the two best candidate matches. When the distance ratio is larger than a predetermined threshold, the match is identified as an outlier.

A symmetrical matching test is applied to further identify other potential remaining outliers. In the symmetrical matching test, if the match between key points in the reference image and test image is unique (i.e. the key points in the reference and test image match one another, but do not match any other key points in the corresponding image), then the key points will be kept. If a match between corresponding key point(s) in the reference image and test image is not unique, those key points will be removed.

After performing brute-forced matching, there are still potential outliers in the remaining matches. Accordingly, an outlier identification algorithm Random Sample Consensus (RANSAC) algorithm is applied to further remove outliers. The details of RANSAC algorithm are summarized below. In one inventive concept implementing the RANSAC algorithm, the best match is found, and the number of matching key points is recorded.

RANSAC is a learning technique to estimate parameters of a model by random sampling of observed data. For plane image matching tasks, such as documents, the model is a homograph transformation of a 3 by 3 matrix.

In one inventive concept, the RANSAC algorithm to estimate the homograph transformation is as follows. First, randomly select four key points in a testing image, and randomly select four key points in a reference image. Second, estimate a homograph transform with the above four key point pairs using a four-point algorithm, e.g. as described below regarding image reconstruction. Third, apply the homograph transformation to all key points in the reference and testing images. The inlier key points are identified if they match the model well, otherwise the key points will be identified as outliers. In various inventive concepts, more than four points may be selected for this purpose, but preferably four points are utilized to minimize computational overhead while enabling efficient, effective matching.

The foregoing three-step process is repeated in an iterative fashion to re-sample the key points and estimate a new homograph transform. In one inventive concept, the number of iterations performed may be in a range from about $10^2$-$10^3$ iterations. After the iterative identification of key points is complete, the largest inlier set is retained, and an affine or homograph transform is re-estimated based on the retained inlier set.

After removing outliers, the matching process selects the reference image with the maximum number of matching points as the best match, and an affine or homograph transform is estimated with the best match to reconstruct the image and/or video data in a three-dimensional coordinate system. Image reconstruction mechanics are discussed in further detail below.

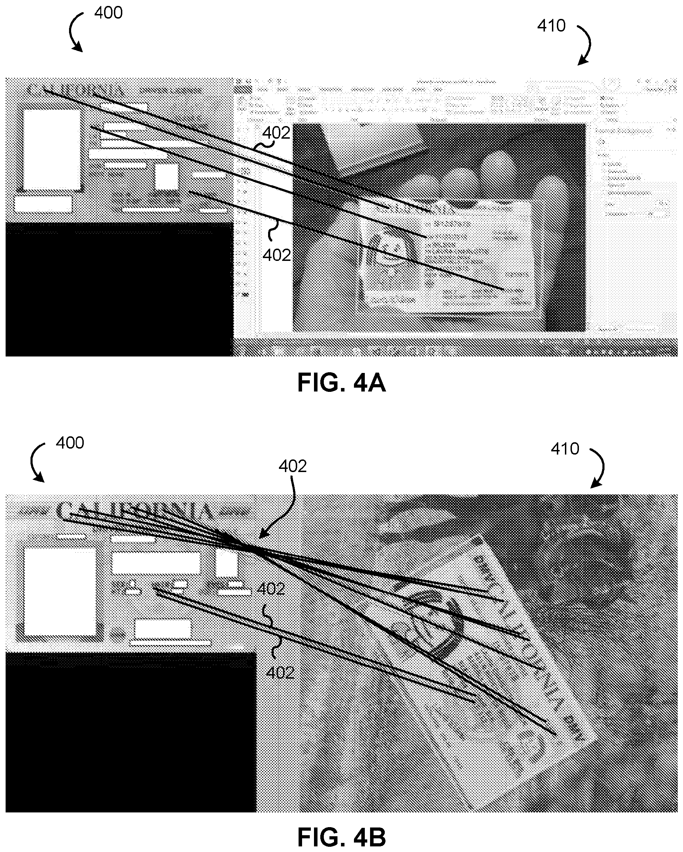

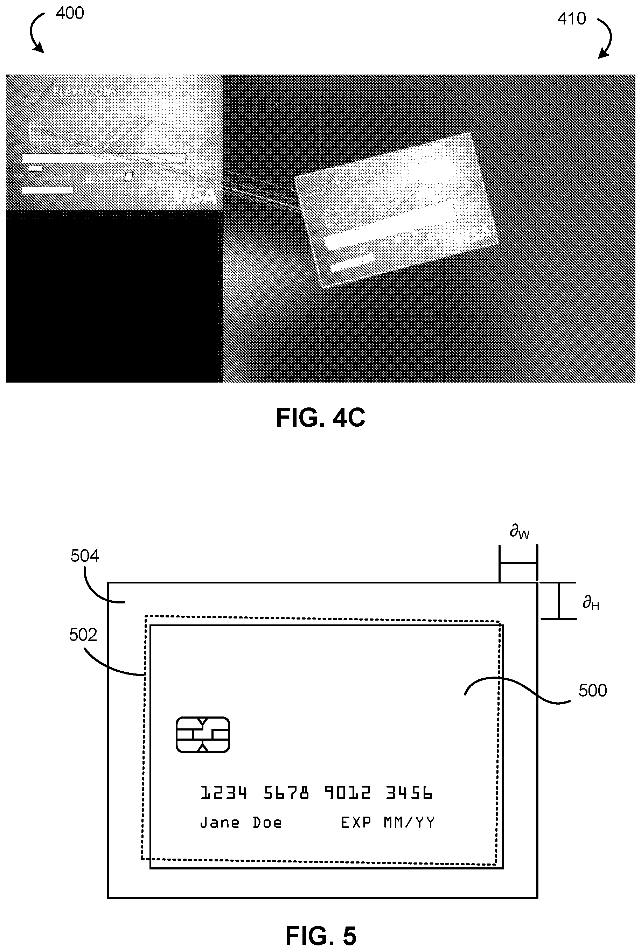

Exemplary mappings of key points between a reference image **400** and test image **410** are shown, according to two inventive concepts, in FIGS. **4A-4B,** with mapping lines **402** indicating the correspondence of key points between the two images. FIG. **4C** depicts a similar reference/test image pair, showing a credit or debit card and exemplary corresponding key points therein, according to another inventive concept.

Advantageously, by identifying internal key points and mapping key points located in a test image **410** to corresponding key points in a reference image **400,** the presently disclosed inventive concepts can detect objects depicted in image and/or video data even when the edges of the object are obscured or missing from the image, or when a complex background is present in the image or video data.

Once an appropriate transform is estimated, the presently disclosed inventive concepts advantageously allow the estimation of object edge/border locations based on the transform. In brief, based on the edge locations determined from the reference image data, it is possible to estimate the locations of corresponding edges/borders in the test image via the transform, which defines the point-to-point correspondence between the object as oriented in the test image and a corresponding reference image orientation within the same coordinate system. According to the inventive concept shown in FIGS. **4A** and **4B,** estimating the edge locations involves evaluating the transform of the document plane shown in test image **410** to the document plane shown in the reference image **400** (or vice versa), and extrapolating edge positions based on the transform.

FIG. **4C** shows a similar mapping of key points between a reference image **400** and test image **410** of a credit card. In the particular case of credit cards, and especially credit cards including an IC chip, it is possible to identify key points within the region of the card including the IC chip, and estimate transform(s) and/or border locations using these regions as the sole source of key points, in various inventive concepts. Accordingly, the presently disclosed inventive concepts are broadly applicable to various different types of objects and identifying features, constrained only by the ability to obtain and identify appropriate identifying features in a suitable reference image or set of reference images. Those having ordinary skill in the art will appreciate the scope to which these inventive concepts may be applied upon reading the instant disclosures.

Based on the transform, and the projected object edges, the presently disclosed inventive concepts may include transforming and cropping the test image to form a cropped, reconstructed image based on the test image, the cropped, reconstructed image depicting the object according to a same perspective and cropping of the object as represented in the reference image perspective.

In addition, preferred inventive concepts may include functionality configured to refine the projected location of object edges. For example, considering the results depicted in FIGS. **4A-4C** and **5,** a skilled artisan will understand that the projected edges achieved in these exemplary inventive concepts are not as accurate as may be desired.

As shown in FIG. **5,** an object **500** such as a credit card or other document is depicted in a test image, and edge locations **502** are projected based on the foregoing content-based approach. However, the projected edge locations **502** do not accurately correspond to the actual edges of the object **500.** Accordingly, it may be advantageous, in some approaches, rather than cropping directly according to the projected edge locations **502,** to crop in a manner so as to leave a predetermined amount of background texture depicted in the cropped image, and subsequently perform conventional edge detection. Conventional edge detection shall be understood to include any technique for detecting edges based on detecting transitions between an image background **504** and image foreground (e.g. object **500**) as shown in FIG. **5.** For example, in preferred approaches conventional edge detection may include any technique or functionality as described in U.S. Pat. No. 8,855,375 to Macciola, et al.

The predetermined amount may be represented by a threshold $\partial$, which may be a predefined number of pixels, a percentage of an expected aspect ratio, etc. in various inventive concepts. In some approaches, the amount may be different for each dimension of the image and/or object, e.g. for flat objects a predetermined height threshold $\partial_H$ and/or predetermined width threshold $\partial_W$ may be used. $\partial_H$ and $\partial_W$ may be determined experimentally, and need not be equal in various inventive concepts. For instance, $\partial_H$ and $\partial_W$ may independently be absolute thresholds or relative thresholds, and may be characterized by different values.

In this way, one obtains an image where the document is prominent in the view and the edges reside within some known margin. Now it is possible to employ normal or specialized edge detection techniques, which may include searching for the edge only within the margin. In "normal" techniques, the threshold for detection can be less stringent than typically employed when searching for edges using only a conventional approach, without content-based detection augmentation. For instance, in "normal" techniques the contrast difference required to identify an edge may be less than the difference required without content-based detection augmentation. In "specialized" techniques, one could allow for increased tolerance regarding existence of gaps in the edge than would normally be prudent when searching an entire image (e.g. as would be present in FIG. **4A).**

In various approaches, a further validation may be performed on the image and/or video data by classifying the cropped, reconstructed image. Classification may be performed using any technique suitable in the art, preferably a classification technique as described in U.S. Patent Application No. 13/802,226 (filed March 13, 2013). If the classification result returns the appropriate object type, then the image matching and transform operations are likely to have been correctly achieved, whereas if a different object type is returned from classification, then the transform and/or cropping result are likely erroneous. Accordingly, the presently disclosed inventive concepts may leverage classification as a confidence measure to evaluate the image matching and reconstruction techniques discussed herein.

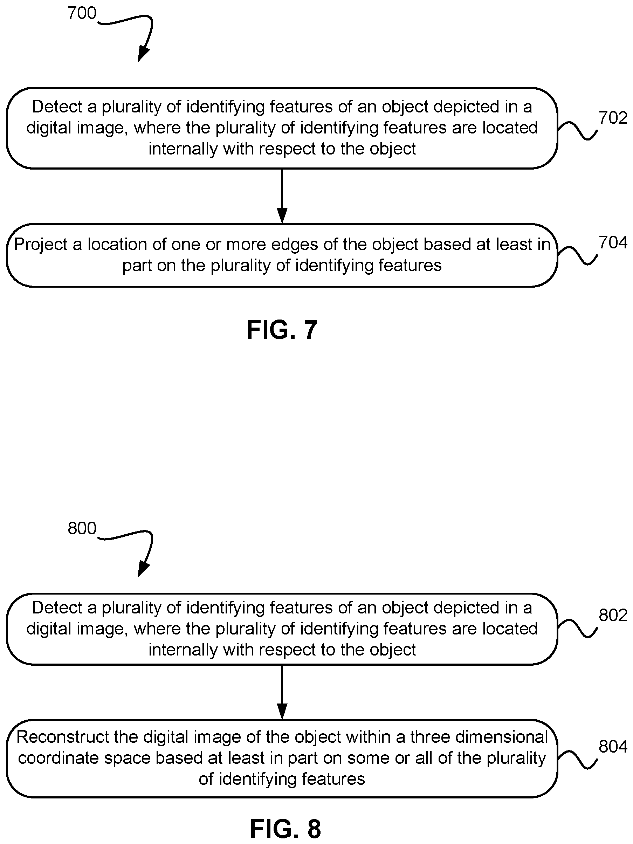

As described herein, according to one inventive concept a method **700** for detecting objects depicted in digital images based on internal features of the object includes operations as depicted in FIG. **7.** As will be understood by a person having ordinary skill in the art upon reading the present descriptions, the method **700** may be performed in any suitable environment, including those depicted in FIGS. **1-2** and may operate on inputs and/or produce outputs as depicted in FIGS. **3A-5,** in various approaches.

As shown in FIG. **7,** method **700** includes operation **702,** in which a plurality of identifying features of the object are detected. Notably, the identifying features are located internally with respect to the object, such that each identifying feature is, corresponds to, or represents a part of the object other than object edges, boundaries between the object and image background, or other equivalent transition between the object and image background. In this manner, and according to various inventive concepts the presently disclosed inventive content-based object recognition techniques are based exclusively on the content of the object, and/or are performed exclusive of traditional edge detection, border detection, or other similar conventional recognition techniques known in the art.

The method **700** also includes operation **704,** where a location of one or more edges of the object are projected, the projection being based at least in part on the plurality of identifying features.

Of course, the method **700** may include any number of additional and/or alternative features as described herein in any suitable combination, permutation, selection thereof as would be appreciated by a skilled artisan as suitable for performing content-based object detection, upon reading the instant disclosures.

Method 700 includes detecting the plurality of identifying features based on analyzing a plurality of feature vectors each corresponding to pixels within a patch of the digital image. The analysis is performed in order to determine whether the patch includes a sharp transition in intensity, in preferred approaches. The analysis may optionally involve determining a position of some or all of the plurality of identifying features, or position determination may be performed separately from feature vector analysis, in various inventive concepts.

Optionally, in one inventive concept detecting the plurality of identifying features involves automatic feature zone discovery. The automatic feature zone discovery may be a multi-pass procedure.

Method 700 also includes identifying a plurality of distinctive pixels within the plurality of identifying features of the object. Distinctive pixels are preferably characterized by having or embodying distinct visual features of the object.

Method 700 includes matching the digital image depicting the object to one of a plurality of reference images each depicting a known object type. The reference images are more preferably images used to train the recognition/detection engine to identify specific identifying features that are particularly suitable for detecting and/or reconstructing objects of the known object type in various types of images and/or imaging circumstances (e.g. different angles, distances, resolutions, lighting conditions, color depths, etc. in various inventive concepts). Accordingly, the matching procedure involves determining whether the object includes distinctive pixels that correspond to distinctive pixels present in one or more of the plurality of reference images.

The method 700 includes designating as an outlier a candidate match between a distinctive pixel in the digital image and one or more candidate corresponding distinctive pixels present in one of the plurality of reference images. The outlier is preferably designated in response to determining a distance ratio is greater than a predetermined distance ratio threshold. Moreover, the distance ratio may be a ratio describing: a first distance between the distinctive pixel in the digital image and a first of the one or more candidate corresponding distinctive pixels; and a second distance between the distinctive pixel in the digital image and a second of the one or more candidate corresponding distinctive pixels.

Method 700 includes designating as an outlier a candidate match between a distinctive pixel in the digital image and a candidate corresponding distinctive pixel present in one of the plurality of reference images in response to determining the candidate match is not unique. Uniqueness may be determined according to a symmetrical matching test, in preferred approaches and as described in greater detail hereinabove.

Notably, employing reconstruction as set forth herein, particularly with respect to method 700, carries the advantage of being able to detect and recognize objects in images where at least one edge of the object is either obscured or missing from the digital image. Thus, the presently disclosed inventive concepts represent an improvement to image processing machines and the image processing field since conventional image detection and image processing/correction techniques are based on detecting the edges of objects and making appropriate corrections based on characteristics of the object and/or object edges (e.g. location within image, dimensions such as particularly aspect ratio, curvature, length, etc.). In image data where edges are missing, obscured, or otherwise not represented at least in part, such conventional techniques lack the requisite input information to perform the intended image processing/correction.

**In** some approaches, the method **700** may include cropping the digital image based at least in part on the projected location of the one or more edges of the object. The cropped digital image preferably depicts a portion of a background of the digital image surrounding the object; and in such approaches method **700** may include detecting one or more transitions between the background and the object within the cropped digital image.

The method **700** may optionally involve classifying the object depicted within the cropped digital image. As described in further detail elsewhere herein, classification may operate as a type of orthogonal validation procedure or confidence measure for determining whether image recognition and/or reconstruction was performed correctly by implementing the techniques described herein. In brief, if a reconstructed image of an object is classified and results in a determination that the object depicted in the reconstructed image is a same type of object represented in/by the reference image used to reconstruct the object, then it is likely the reconstruction was performed correctly, or at least optimally under the circumstances of the image data.

With continuing reference to classification, method **700** in one inventive concept may include: attempting to detect the object within the digital image using a plurality of predetermined object detection models each corresponding to a known object type; and determining a classification of the object based on a result of attempting to detect the object within the digital image using the plurality of predetermined object detection models. The classification of the object is the known object type corresponding to one of the object detection models for which the attempt to detect the object within the digital image was successful.

The method **700,** in additional aspects, may include: generating a plurality of scaled images based on the digital image, each scaled image being characterized by a different resolution; extracting one or more feature vectors from each scaled image; and matching one or more of the scaled images to one of a plurality of reference images. Each reference image depicts a known object type and being characterized by a known resolution.

Of course, in various inventive concepts and as described in greater detail below, the techniques and features of method **700** may be combined and used to advantage in any permutation with the various image reconstruction techniques and features such as presented with respect to method **800.**

**Content-Based Image Reconstruction**

Reconstructing image and/or video data as described herein essentially includes transforming the representation of the detected object as depicted in the captured image and/or video data into a representation of the object as it would appear if viewed from an angle normal to a particular surface of the object. In the case of documents, or other flat objects, this includes reconstructing the object representation to reflect a face of the flat object as viewed from an angle normal to that face. For such flat objects, if the object is characterized by a known geometry (e.g. a particular polygon, circle, ellipsoid, etc.) then *a priori* knowledge regarding the geometric characteristics of the known geometry may be leveraged to facilitate reconstruction

For other objects having three-dimensional geometries, and/or flat objects having non-standard geometries, reconstruction preferably includes transforming the object as represented in captured image and/or video data to represent a same or similar object type as represented in one or more reference images captured from a particular angle with respect to the object. Of course, reference images may also be employed to facilitate reconstruction of flat objects in various inventive concepts and without departing from the scope of the presently disclosed inventive concepts.

Accordingly, in preferred approaches the reconstructed representation substantially represents the actual dimensions, aspect ratio, etc. of the object captured in the digital image when viewed from a particular perspective (e.g. at an angle normal to the object, such as would be the capture angle if scanning a document in a traditional flatbed scanner, multifunction device, etc. as would be understood by one having ordinary skill in the art upon reading the present descriptions).

Various capture angles, and the associated projective effects are demonstrated schematically in FIGS. **6A-6D.**

In some approaches, the reconstruction may include applying an algorithm such as a four-point algorithm to the image data.

In one inventive concept, perspective correction may include constructing a 3D transformation based at least in part on the spatial distribution of features represented in the image and/or video data.

A planar homography/projective transform is a non-singular linear relation between two planes. In this case, the homography transform defines a linear mapping of four randomly selected pixels/positions between the captured image and the reference image.

The calculation of the camera parameters may utilize an estimation of the homography transform $H$, such as shown in Equation (1), in some approaches.

$$\lambda \begin{pmatrix} x \\ y \\ 1 \end{pmatrix} = \underbrace{\begin{pmatrix} h_{11} & h_{12} & h_{13} \\ h_{21} & h_{22} & h_{23} \\ h_{31} & h_{32} & h_{33} \end{pmatrix}}_{\text{homography } H} \begin{pmatrix} X \\ Y \\ 1 \end{pmatrix} \quad \text{(1)}$$

As depicted above in Equation (1):

- $\lambda$ is the focal depth of position $(X, Y, Z)$ in the "reference" or "real-world" coordinate system, (e.g. a coordinate system derived from a reference image,). Put another way, $\lambda$ may be considered the linear distance between a point $(X,Y,Z)$ in the reference coordinate system and the capture device;
- $(x, y, z)$ are the coordinates of a given pixel position in the captured image; and
- $H$ is a (3 x 3) matrix having elements $h_{ij}$, where, $i$ and $j$ define the corresponding row and column index, respectively.

In one approach, the *(x, y)* coordinates and $(X, Y)$ coordinates depicted in Equation 1 correspond to coordinates of respective points in the captured image plane and the reference image. In some approaches, the Z coordinate may be set to 0, corresponding to an assumption that the object depicted in each lies along a single (e.g. *X-Y*) plane with zero thickness. In one inventive concept, it is possible to omit the z value in Equation 1 from the above calculations because it does not necessarily play any role in determining the homography matrix.

Thus, the homography $H$ can be estimated by detecting four point-correspondences $p_i \leftrightarrow P_i'$ with $p_i = (x_i, y_i, 1)^\mathsf{T}$ being the position of a randomly selected feature in the captured image plane; and $P_i' = (X_i, Y_i, 1)^\mathsf{T}$ being the coordinates of the corresponding position in the reference image, where $i$ is point index value with range from 1 to $n$ in the following discussion. Using the previously introduced notation, Equation (1) may be written as shown in Equation (2) below.

$$\lambda p_i = H P_i' \quad \text{(2)}$$

In order to eliminate a scaling factor, in one inventive concept it is possible to calculate the cross product of each term of Equation (2), as shown in Equation (3):

$$p_i \times (\lambda p_i) = p_i \times (H P_i') \quad \text{(3)}$$

Since $p_i \times p_i = 0_3$, Equation (3) may be written as shown below in Equation (4).

$$p_i \times H P_i' = 0_3 \quad \text{(4)}$$

Thus, the matrix product $HP_i'$ may be expressed as in Equation (5).

$$H P_i' = \begin{bmatrix} h^{1\mathsf{T}} P_i' \\ h^{2\mathsf{T}} P_i' \\ h^{3\mathsf{T}} P_i' \end{bmatrix} \quad \text{(5)}$$

According to Equation 5, $h^{m\mathsf{T}}$ is the transpose of the $m^{th}$ row of $H$ (e.g. $h^{1\mathsf{T}}$ is the transpose of the first row of $H$, $h^{2\mathsf{T}}$ is the transpose of the second row of $H$, etc.). Accordingly, it is possible to rework Equation (4) as:

$$p_i \times H P_j' = \begin{pmatrix} x_i \\ y_i \\ 1 \end{pmatrix} \times \begin{bmatrix} h^{1T} P_i' \\ h^{2T} P_i' \\ h^{3T} P_i' \end{bmatrix} = \begin{bmatrix} y_i h^{3T} P_i' - h^{2T} P_i' \\ h^{1T} P_i' - x_i h^{3T} P_i' \\ x_i h^{2T} P_i' - y_i h^{1T} P_i' \end{bmatrix} = 0_3. \quad (6)$$

Notably, Equation (6) is linear in $h^{mT}$ and $h^{mT} P_i' = Pi^T h^m$. Thus, Equation (6) may be reformulated as shown below in Equation (7):

$$\begin{bmatrix} 0_3^T & -P_i'^T & y_i P_i'^T \\ P_i'^T & 0_3^T & -x_i P_i'^T \\ -y_i P_i'^T & x_i P_i'^T & 0_3^T \end{bmatrix} \begin{bmatrix} h^1 \\ h^2 \\ h^3 \end{bmatrix} = 0_9. \quad (7)$$

Note that the rows of the matrix shown in Equation (7) are not linearly independent. For example, in one inventive concept the third row is the sum of $-x_i$ times the first row and $-y_i$ times the second row. Thus, for each point-correspondence, Equation (7) provides two linearly independent equations. The two first rows are preferably used for solving $H$.

Because the homography transform is written using homogeneous coordinates, in one inventive concept the homography $H$ may be defined using 8 parameters plus a homogeneous scaling factor (which may be viewed as a free $9^{th}$ parameter). In such inventive concepts, at least 4 point-correspondences providing 8 equations may be used to compute the homography. In practice, and according to one exemplary inventive concept, a larger number of correspondences is preferably employed so that an over-determined linear system is obtained, resulting in a more robust result (e.g. lower error in relative pixel-position). By rewriting $H$ in a vector form as $h = [h_{11}, h_{12}, h_{13}, h_{21}, h_{22}, h_{23}, h_{31}, h_{32}, h_{33}]^T$, n pairs of point-correspondences enable the construction of a 2n $\times$ 9 linear system, which is expressed by Equation (8)

$$\begin{pmatrix} 0 & 0 & 0 & -X_1 & -Y_1 & -1 & y_1 X_1 & y_1 X_1 & y_1 \\ X_1 & Y_1 & 1 & 0 & 0 & 0 & -x_1 X_1 & -x_1 Y_1 & -x_1 \\ 0 & 0 & 0 & -X_2 & -Y_2 & -1 & y_2 X_2 & y_2 X_2 & y_2 \\ X_2 & Y_2 & 1 & 0 & 0 & 0 & -x_2 X_2 & -x_2 Y_2 & -x_2 \\ \vdots & \vdots & \vdots & \vdots & \vdots & \vdots & \vdots & \vdots & \vdots \\ 0 & 0 & 0 & -X_n & -Y_n & -1 & y_n X_n & y_n X_n & y_n \\ X_n & Y_n & 1 & 0 & 0 & 0 & -x_n X_n & -x_n Y_n & -x_n \end{pmatrix} \begin{pmatrix} h_{11} \\ h_{12} \\ h_{13} \\ h_{21} \\ h_{22} \\ h_{23} \\ h_{31} \\ h_{32} \\ h_{33} \end{pmatrix} = 0_9. \quad (8)$$

$$\underbrace{\phantom{XXXXXXXXXXXXXXXXXXXXXXXXXXXXXXXXXX}}_{C}$$

As shown in Equation 8, the first two rows correspond to the first feature point, as indicated by the subscript value of coordinates $X, Y, x, y$ - in this case the subscript value is 1. The second two rows correspond to the second feature point, as indicated by the subscript value 2, the last two rows correspond to the $n^{th}$ feature point. For a four-point algorithm, n is 4, and the feature points are the four randomly selected features identified within the captured image and corresponding point of the reference image.

In one approach, solving this linear system involves the calculation of a *Singular Value Decomposition* (SVD). Such an SVD corresponds to reworking the matrix to the form of the matrix product $C = UDV^T$, where the solution $h$ corresponds to the eigenvector of the smallest eigenvalue of matrix $C$, which in one inventive concept may be located at the last column of the matrix $V$ when the eigenvalues are sorted in descendant order.

It is worth noting that the matrix $C$ is different from the typical matrix utilized in an eight-point algorithm to estimate the essential matrix when two or more cameras are used, such as conventionally performed for stereoscopic machine vision. More specifically, while the elements conventionally used in eight-point algorithm consist of feature points projected on two camera planes, the elements in the presently described matrix $C$ consist of feature points projected on only a single camera plane and the corresponding feature points on 3D objects.

In one inventive concept, to avoid numerical instabilities, the coordinates of point-correspondences may preferably be normalized. This may be accomplished, for example, using a technique known as the normalized *Direct Linear Transformation* (DLT) algorithm. For example, in one inventive concept, after the homography matrix is estimated, Equation 1 may be used to compute each pixel position $(x, y)$ for a given value of $(X, Y)$. In practical applications the challenge involves computing $(X, Y)$ when the values of $(x, y)$ are given or known *a priori.* As shown in Equation 1, and in preferred inventive concepts, $(x, y)$ and $(X, Y)$ are symmetrical (i.e. when the values of $(x, y)$ and $(X, Y)$ are switched, the validity of Equation 1 holds true). In this case, the "inverse" homography matrix may be estimated, and this "inverse" homography matrix may be used to reconstruct 3D (i.e. "reference" or "real-world") coordinates of an object given the corresponding 2D coordinates of the object as depicted in the captured image, e.g. in the camera view.

Based on the foregoing, it is possible to implement the presently described four-point algorithm (as well as any equivalent variation and/or modification thereof that would be appreciated by a skilled artisan upon reading these descriptions) which may be utilized in various inventive concepts to efficiently and effectively reconstruct digital images characterized by at least some perspective distortion into corrected digital images exempting any such perspective distortion, where the corrected image is characterized by a pixel location error of about 5 pixels or less.

Various inventive concepts may additionally and/or alternatively include utilizing the foregoing data, calculations, results, and/or concepts to derive further useful information regarding the captured image, object, etc. For example, in various inventive concepts it is possible to determine the distance between the captured object and the capture device, the pitch and/or roll angle of the capture device, etc. as would be understood by one having ordinary skill in the art upon reading the present descriptions.

After *(X, Y)* values are estimated, the expression in Equation 1 may be described as follows:

$$\lambda = h_{31}X + h_{32}Y + h_{33} \qquad (9)$$

Accordingly, in one inventive concept the focal depth, also known as the distance between each point *(X, Y, Z)* in the 3D (i.e. "reference" or "real world") coordinate system and the capture device, may be computed using Equation 9 above.

*Determining a rotation matrix of the object.*

After estimating the position of the 3D object *(X, Y)* and $\lambda$ for each pixel in the captured image. Note that *(X, Y)* are the coordinates in the world coordinate system, while $\lambda$ is the distance to the point *(X, Y)* in the camera coordinate system. If the 3D object is assumed to be a rigid body, it is appropriate to use the algorithm disclosed herein to estimate the rotation matrix from the world coordinate system to the camera coordinate system. The following equation holds for rotation and translation of the point *(X, Y, 0)*:

$$\begin{pmatrix} X_c \\ Y_c \\ Z_c \end{pmatrix} = R \begin{pmatrix} X \\ Y \\ 0 \end{pmatrix} + t \qquad (10)$$

where *(Xc, Yc, Zc)* are the coordinates relative to camera coordinate system, which are derived by rotating a point *(X, Y, Z)* in the world coordinate system with rotation matrix R, and a translation vector of *t,* where *t* is a constant independent of *(X, Y)*. Note that the value of Zc is the same as the value of $\lambda$, as previously estimated using equation 9.

Considering the relationships of homography matrix H and intrinsic camera parameter matrix A and r1, r2, where r1, r2 are the first and second column vectors respectively, reveals the following relationship:

$$H = \sigma A(r_1, r_2, t) \qquad (11)$$

where $\sigma$ is a constant and A is the intrinsic camera parameter matrix, defined as:

$$A = \begin{pmatrix} a & c & d \\ & b & e \\ & & 1 \end{pmatrix} \qquad (12)$$

where a and b are scaling factors which comprise of the camera focal length information, a=f/dx, and b=f/dy, where f is the focal length, while dx, dy are scaling factors of the image; c is the skew parameter about two image axes, and (d, e) are the coordinates of the corresponding principal point.

After estimation of homography matrix H, the matrix A can be estimated as follows:

$$a = \sqrt{w/B_{11}}; \qquad (12.1)$$

$$b = \sqrt{wB_{11}(B_{11}B_{22} - B_{12}^2)}; \qquad (12.2)$$

$$c = -B_{12}a^2b/w; d = \frac{vv_0}{b} - B_{13}a^2/w; \qquad (12.3)$$

$$v = -B_{12}a^2b/w; \qquad (12.4)$$

$$e = (B_{12}B_{13} - B_{11}B_{23})/(B_{11}B_{22} - B_{12}^2); \qquad (12.5)$$

$$w = B_{33} - \left(B_{13}^2 + e(B_{12}B_{13} - B_{11}B_{23})\right)/B_{11}. \qquad (12.6)$$

In the above relationships, the unknown parameters are $B_{ij}$. These values are estimated by the following equations:

$$\begin{pmatrix} v_{12}^t \\ (v_{11} - v_{22})^t \end{pmatrix} G = 0, \qquad (12.7)$$

where G is the solution of the above equation, alternatively expressed as:

$$G = (B_{11}, B_{12}, B_{22}, B_{13}, B_{23}, B_{33})^t, \qquad (12.8)$$

where

$$v_{ij} = \left(h_{i1}h_{j1}, h_{i1}h_{j2} + h_{i2}h_{j1}, h_{i2}h_{j2}, h_{i3}h_{j1} + h_{i1}h_{j3}, h_{i3}h_{j2} + h_{i2}h_{j3}, h_{i3}h_{j3}\right)^t \quad (12.9)$$

Note that in a conventional four-points algorithm, since it is possible to accurately estimate scaling factors a, b, the skew factor c is assumed to be zero, which means that one may ignore camera's skew distortion. It is further useful, in one inventive concept, to assume that d and e have zero values (d=0, e=0).

From equation (11), $B = (r1 \; r2 \; t)$, where $\sigma^{-1}A^{-1}H = B$. Utilizing this relationship enables a new approach to estimate r1, r2 from the equation C= (r1 r2 0) where the first and second column vectors of C are the first and second column vectors of B, and the third column vector of C is 0.

First, decompose matrix C with SVD (*Singular Value Decomposition*) method, $C = U\Sigma V^t$, where U is 3 by 3 orthogonal matrix, where V is 3 by 3 orthogonal matrix. Then r1 and r2 are estimated by the following equation:

$$(r_1 \quad r_2 \quad 0) = U \begin{pmatrix} W \\ 0 \end{pmatrix} \qquad (13)$$

where W is a 2 by 3 matrix whose first and second row vectors are the first and second row vectors of $V^t$ respectively. In the above computation, assume $\sigma$ is 1. This scaling factor does not influence the value of U and W and therefore does not influence the estimation of r1 and r2. After r1, r2 are estimated (e.g. using Equation 13), it is useful to leverage the fact that R is a rotation matrix to estimate r3, which is the cross product of r1 and r2 with a sign to be determined (either 1 or -1). There are two possible solutions of R. In one example using a righthand coordinate system, the r3 value is the cross-product value of r1 and r2.

*Determining yaw, pitch, and roll from a rotation matrix.*

The yaw, pitch and roll (denoted by the $\alpha$, $\beta$ and $\gamma$ respectively) are also known as Euler's angles, which are defined as the rotation angles around z, y, and x axes respectively, in one inventive concept. According to this approach, the rotation matrix R in Equation 10 can be denoted as:

$$R = \begin{pmatrix} r_{11} & r_{12} & r_{13} \\ r_{21} & r_{22} & r_{23} \\ r_{31} & r_{32} & r_{33} \end{pmatrix} \qquad (14)$$

where each r is an element of the matrix R.

It is often convenient to determine the $\alpha$, $\beta$ and $\gamma$ parameters directly from a given rotation matrix R. The roll, in one inventive concept, may be estimated by the following equation (e.g. when $r_{33}$ is not equal to zero):

$$\gamma = atan2(r_{32}, r_{33}) \tag{15}$$

Similarly, in another approach the pitch may be estimated by the following equation:

$$\beta = atan2(-r_{31}, \sqrt{r_{11}^2 + r_{21}^2}) \tag{16}$$

In still more approaches, the yaw may be estimated by the following equation (e.g. when $r_{11}$ is nonzero)

$$\alpha = atan2(r_{21}, r_{11}) \tag{17}$$

Notably, in some approaches when $r_{11}$, $r_{33}$ or $\sqrt{r_{11}^2 + r_{21}^2}$ are near in value to zero (e.g. $0 < r_{11} < \varepsilon$, $0 < r_{33} < \varepsilon$, or $0 < \sqrt{r_{11}^2 + r_{21}^2} < \varepsilon$, where the value $\varepsilon$ is set to a reasonable value for considering the numerical stability, such as $0 < \varepsilon \leq 0.01$, in one inventive concept, and $\varepsilon = 0.0001$ in a particularly preferred inventive concept. In general, the value of $\varepsilon$ may be determined in whole or in part based on limited computer word length, etc. as would be understood by one having ordinary skill in the art upon reading the present descriptions), this corresponds to the degenerate of rotation matrix R, special formulae are used to estimate the values of yaw, pitch and roll.

*Estimating Distance Between Object and Capture Device*

In still more inventive concepts, it is possible to estimate the distance between an object and a capture device even without the knowledge of the object size, using information such as a camera's intrinsic parameters (e.g. focal length, scale factors of (u, v) in image plane).

The requirements of this algorithm, in one approach, may be summarized as follows: 1)The camera's focal length for the captured image can be provided and accessed by an API call of the device (for instance, an android device provides an API call to get focal length information for the captured image); 2) The scale factors of dx and dy are estimated by the algorithm in the equations 12.1 and 12.2.

This enables estimation of the scale factors dx, dy for a particular type of device, and does not require estimating scale factors for each device individually. For instance, in one exemplary inventive concept utilizing an Apple iPhone® 4 smartphone, it is possible, using the algorithm presented above, to estimate the scale factors using an object with a known size. The two scaling factors may thereafter be assumed to be identical for the same device type.

The algorithm to estimate object distance to camera, according to one illustrative approach, is described as follows: normalize *(u, v), (X, Y)* in the equation below

$$\lambda \begin{pmatrix} u \\ v \\ 1 \end{pmatrix} = H \begin{pmatrix} X \\ Y \\ 1 \end{pmatrix} \tag{18}$$

Note that Equation 18 is equivalent to Equation 1, except *(u, v)* in Equation 18 replaces the *(x, y)* term in Equation 1.

Suppose that $\tilde{u} = u/L_u$, $\tilde{v} = v/L_v$; $\tilde{x} = X/L_X$; $\tilde{y} = Y/L_Y$; where $L_u$, $L_v$ are image size in coordinates $u$ and v and $L_X$, $L_Y$ are the object size to be determined.

Then Equation 18 may be expressed as:

$$\lambda \begin{pmatrix} \tilde{u} \\ \tilde{v} \\ 1 \end{pmatrix} = \tilde{H} \begin{pmatrix} \tilde{x} \\ \tilde{y} \\ 1 \end{pmatrix}, \tag{19}$$

where

$$\tilde{H} = \begin{pmatrix} 1/L_u & & \\ & 1/L_v & \\ & & 1 \end{pmatrix} H \begin{pmatrix} L_x & & \\ & L_y & \\ & & 1 \end{pmatrix} \qquad (20)$$

Normalized homography matrix $\bar{H}$ can be estimated by equation (20). Note that from equation 11, the following may be determined:

$$H = \sigma A \begin{pmatrix} r_1 & r_2 & t \end{pmatrix} \qquad (21)$$

and the intrinsic parameter matrix of the camera is assumed with the following simple form:

$$A = \begin{pmatrix} f/dx & c & d \\ & f/dy & e \\ & & 1 \end{pmatrix} \qquad (22)$$

where f is the camera focal length, dx, dy are scaling factors of the camera, which are estimated.
From equations (19), (20) and (21), thus:

$$\sigma A \begin{pmatrix} r_1 & r_2 & t \end{pmatrix} \begin{pmatrix} L_x & & \\ & L_y & \\ & & 1 \end{pmatrix} = \tilde{\tilde{H}} \qquad (23)$$

where

$$\tilde{\tilde{H}} = \begin{pmatrix} L_u & & \\ & L_v & \\ & & 1 \end{pmatrix} \tilde{H}$$

Because A is known, from equation (23) the following may be determined:

$$\sigma \begin{pmatrix} r_1 & r_2 & t \end{pmatrix} \begin{pmatrix} L_x & & \\ & L_y & \\ & & 1 \end{pmatrix} = A^{-1} \tilde{\tilde{H}} \qquad (24)$$

Denote $K = A^{-1} \tilde{\tilde{H}}$, $K = (k_1, k_2, k_3)$, from equation (24) the following may be determined:

$$\sigma r_1 L_x = k_1 \qquad (25)$$

$$\sigma r_2 L_y = k_2 \qquad (26)$$

$$\sigma t = k_3 \qquad (27)$$

because $t$ in equation (27) is the translation vector of the object relative to camera. The L2 norm (Euclidean norm) of $t$ is as follows:

$$\|t\| = \|k_3\| / \sigma \qquad (28)$$

is the distance of left-top corner of the object to the camera.

Because $\|r_1\| = \|r_2\| = 1$, from equation (8) and (9), the following may be determined

$$L_x = \|k_1\| / \sigma \qquad (29)$$

$$L_y = \|k_2\| / \sigma \qquad (30)$$

Equations (29) and (30) may be used to estimate the document size along $X$ and $Y$ coordinates. The scaling factor may remain unknown, using this approach.

Note that the algorithm to estimate rotation matrix described above does not need the scaling factor $\sigma$. Rather, in some approaches it is suitable to assume $\sigma = 1$. In such cases, it is possible to estimate roll, pitch, and yaw with the algorithm presented above. Equations (29) and (30) may also be used to estimate the aspect ratio of the object as:

$$aspectratio = L_x / L_y = \|k_1\| / \|k_2\| \qquad (31)$$

*Estimation of Pitch and Roll from Assumed Rectangle.*

In practice the most common case is the camera capture of rectangular documents, such as sheets of paper of standard sizes, business cards, driver and other licenses, etc. Since the focal distance of the camera does not change, and since the knowledge of the yaw is irrelevant for the discussed types of document image processing, it is necessary only to determine roll and pitch of the camera relative to the plane of the document in order to rectangularize the corresponding image of the document.

The idea of the algorithm is simply that one can calculate the object coordinates of the document corresponding to the tetragon found in the picture (up to scale, rotation, and shift) for any relative pitch-roll combination. This calculated tetragon in object coordinates is characterized by 90-degree angles when the correct values of pitch and roll are used, and the deviation can be characterized by the sum of squares of the four angle differences. This criterion is useful because it is smooth and effectively penalizes individual large deviations.

A gradient descent procedure based on this criterion can find a good pitch-roll pair in a matter of milliseconds. This has been experimentally verified for instances where the tetragon in the picture was correctly determined. This approach uses yaw equal zero and an arbitrary fixed value of the distance to the object because changes in these values only add an additional orthogonal transform of the object coordinates. The approach also uses the known focal distance of the camera in the calculations of the coordinate transform, but if all four corners have been found and there are three independent angles, then the same criterion and a slightly more complex gradient descent procedure can be used to estimate the focal distance in addition to pitch and roll - this may be useful for server-based processing, when incoming pictures may or may not have any information about what camera they were taken with.

Interestingly, when the page detection is wrong, even the optimal pitch-roll pair leaves sizeable residual angle errors (of 1 degree or more), or, at least, if the page was just cropped-in parallel to itself, the aspect ratio derived from the found object coordinates does not match the real one.

Additionally, it is possible to apply this algorithm even when a location of one of the detected sides of the document is suspect or missing entirely (e.g. that side of the document is partially or completely obstructed, not depicted, or is blurred beyond recognition, etc.). In order to accomplish the desired result it is useful to modify the above defined criterion to use only two angles, for example those adjacent to the bottom side, in a gradient descent procedure. In this manner, the algorithm may still be utilized to estimate pitch and roll from a picture tetragon with bogus and/or undetectable top-left and top-right corners.

In one example, arbitrary points on the left and right sides closer to the top of the image frame can be designated as top-left and top-right corners. The best estimated pitch-roll will create equally bogus top-left and top-right corners in the object coordinates, but the document will still be correctly rectangularized. The direction of a missing (e.g. top) side of the document can be reconstructed since it should be substantially parallel to the opposite (e.g. bottom) side, and orthogonal to adjacent (e.g. left and/or right) side(s).

The remaining question is where to place the missing side in the context of the image as a whole, and if the aspect ratio is known then the offset of the missing side can be nicely estimated, and if not, then it can be pushed to the edge of the frame, just not to lose any data. This variation of the algorithm can resolve an important user case when the picture contains only a part of the document along one of its sides, for example, the bottom of an invoice containing a deposit slip. In a situation like this the bottom, left and right sides of the document can be correctly determined and used to estimate pitch and roll; these angles together with the focal distance can be used to rectangularize the visible part of the document.

In more approaches, the foregoing techniques for addressing missing, obscured, etc. edges in the image data may additionally and/or alternatively employ a relaxed cropping and subsequent use of conventional edge detection as described above with reference to FIG. 5. Of course, if the edge is completely missing from the image and/or video data, then the relaxed cropping techniques may not be suitable to locate the edges and projection as described above may be the sole suitable mechanism for estimating the location of edges. However, in the context of the present disclosures, using internally represented content rather than corner or edge positions as key points allows projection of edge locations in a broader range of applications, and in a more robust manner than conventional edge detection.

As described herein, according to one inventive concept a method **800** for reconstructing objects depicted in digital images based on internal features of the object includes operations as depicted in FIG. **8**. As will be understood by a person having ordinary skill in the art upon reading the present descriptions, the method **800** may be performed in any suitable environment, including those depicted in FIGS. **1-2** and may operate on inputs and/or produce outputs as depicted in FIGS. **3A-5,** in various approaches.

As shown in FIG. **8,** method **800** includes operation **802,** in which a plurality of identifying features of the object are detected. Notably, the identifying features are located internally with respect to the object, such that each identifying feature is, corresponds to, or represents a part of the object other than object edges, boundaries between the object and image background, or other equivalent transition between the object and image background. In this manner, and according to various inventive concepts the presently disclosed inventive image reconstruction techniques are based exclusively on the content of the object, and/or are performed exclusive of traditional edge detection, border detection, or other similar conventional recognition techniques known in the art.

The method **800** also includes operation **804,** where the digital image of the object is reconstructed within a three dimensional coordinate space based at least in part on some or all of the plurality of identifying features. In various inventive concepts, the portion of the image depicting the object may be reconstructed, or the entire image may be reconstructed, based on identifying feature(s)

Of course, the method **800** may include any number of additional and/or alternative features as described herein in any suitable combination, permutation, selection thereof as would be appreciated by a skilled artisan as suitable for performing content-based object detection, upon reading the instant disclosures.

For instance, in one inventive concept, method **800** may additionally or alternatively include reconstructing the digital image of the object based on transforming the object to represent dimensions of the object as viewed from an angle normal to the object. As such, reconstruction effectively corrects perspective distortions, skew, warping or "fishbowl" effects, and other artifacts common to images captured using cameras and mobile devices.

Optionally, in one inventive concept reconstructing the digital image of the object is based on four of the plurality of identifying features, and employs a four-point algorithm as described in further detail elsewhere herein. In such inventive concepts, preferably the four of the plurality of identifying features are randomly selected from among the plurality of identifying features. In some approaches, and as described in greater detail below, reconstruction may involve an iterative process whereby multiple sets of four or more randomly selected identifying features are used to, e.g. iteratively, estimate transform parameters and reconstruct the digital image. Accordingly, reconstructing the digital image of the object may be based at least in part on applying a four-point algorithm to at least some of the plurality of identifying features of the object, in certain aspects.

Reconstructing the digital image of the object may additionally and/or alternatively involve estimating a homography transform $H$. In one approach, estimating $H$ comprises detecting one or more point correspondences $p_i \leftrightarrow P_i'$ with $p_i = (x_i, yi, 1)^T$ as discussed above. Optionally, but preferably, each point correspondence $p_i \leftrightarrow P_i'$ corresponds to a position $p_i$ of one of the plurality of identifying features of the object, and a respective position $P_i'$ of a corresponding identifying feature of the reconstructed digital image of the object. Estimating $H$ may also include normalizing coordinates of some or all of the point correspondences.

As noted above, estimating the homography transform $H$ may include an iterative process. In such inventive concepts, each iteration of the iterative process preferably includes: randomly selecting four key points; using a four point algorithm to estimate an $i^{th}$ homography transform $H_i$ based on the four key points; and applying the estimated $i^{th}$ homography transform $H_i$ to a set of corresponding key points. Each key point corresponds to one of the plurality of identifying features of the object, and in some inventive concepts may be one of the plurality of identifying features of the object. The set of corresponding key points preferably is in the form of a plurality of point correspondences, each point correspondence including: a key point other than the four randomly selected key points; and a corresponding key point from a reference image corresponding to the digital image. The "other" key points also correspond to one of the plurality of identifying features of the object. Thus, each point correspondence includes two key points in preferred inventive concepts: a key point from the test image and a corresponding key point from the reference image. The degree of correspondence between point correspondences may reflect the fitness of the homography transform, in some approaches.

Thus, in some approaches method **800** may include evaluating fitness of the homography transform (or multiple homography transforms generated in multiple iterations of the aforementioned process). The evaluation may include determining one or more outlier key points from among each set of corresponding key points; identifying, from among all sets of corresponding key points, the set of corresponding key points having a lowest number of outlier key points; defining a set of inlier key points from among the set of corresponding key points having the lowest number of outlier key points; and estimating the homography transform $H$ based on the set of inlier key points. Preferably, the set of inlier key points exclude the outlier key points determined for the respective set of corresponding key points.

Furthermore, determining the one or more outlier key points from among each set of corresponding key points may involve: determining whether each of the plurality of point correspondences fits a transformation model corresponding to the estimated $i^{th}$ homography transform $H_i$; and, for each of the plurality of point correspondences, either: designating the other key point of the point correspondence as an outlier key point in response to determining the point correspondence does not fit the transformation model; or designating the other key point of the point correspondence as an inlier key point in response to determining the point correspondence does fit the transformation model.

In several approaches, particularly preferred in the case of objects such as documents and especially standard documents such as forms, templates, identification documents, financial documents, medical documents, insurance documents, etc. as would be understood by a skilled artisan upon reading the instant descriptions, the plurality of identifying features correspond to boilerplate content of the object. In various approaches, boilerplate content may include any type of such content as described hereinabove.

Notably, employing reconstruction as set forth herein, particularly with respect to method **800,** carries the advantage of being able to reconstruct objects and/or images where at least one edge of the object is either obscured or missing from the digital image. Thus, the presently disclosed inventive concepts represent an improvement to image processing machines and the image processing field since conventional image recognition and image processing/correction techniques are based on detecting the edges of objects and making appropriate corrections based on characteristics of the object and/or object edges (e.g. location within image, dimensions such as particularly aspect ratio, curvature, length, etc.). In image data where edges are missing, obscured, or otherwise not represented at least in part, such conventional techniques lack the requisite input information to perform the intended image processing/correction. It should be understood that similar advantages are conveyed in the context of image recognition and method **700,** which enables recognition of objects even where all edges of the object may be missing or obscured in the digital image data since recognition is based on features internal to the object.

In more inventive concepts, method **800** may include cropping the reconstructed digital image of the object based at least in part on a projected location of one or more edges of the object within the reconstructed digital image. The projected location of the one or more edges of the object is preferably based at least in part on an estimated homography transform $H$.

In still more inventive concepts, method **800** may include classifying the reconstructed digital image of the object. As described in further detail elsewhere herein, classification may operate as a type of orthogonal validation procedure or confidence measure for determining whether image recognition and/or reconstruction was performed correctly by implementing the techniques described herein. In brief, if a reconstructed image of an object is classified and results in a determination that the object depicted in the reconstructed image is a same type of object represented in/by the reference image used to reconstruct the object, then it is likely the reconstruction was performed correctly, or at least optimally under the circumstances of the image data.

The foregoing descriptions of methods **700** and **800** should be understood as provided by way of example to illustrate the inventive concepts disclosed herein, without limitation. In other approaches, the techniques disclosed herein may be implemented as a system, e.g. a processor and logic configured to cause the processor to perform operations as set forth with respect to methods **700** and/or **800,** as well as a computer program product, e.g. a computer readable medium having stored thereon computer readable program instructions configured to cause a processor, upon execution thereof, to perform operations as set forth with respect to methods **700** and/or **800.** Any of the foregoing inventive concepts may be employed without departing from the scope of the instant descriptions.

In addition, it should be understood that in various approaches it is advantageous to combine features, operations, techniques, etc. disclosed individually with respect to content based detection and content based recognition as described herein. Accordingly, the foregoing exemplary inventive concepts and descriptions should be understood as modular, and may be combined in any suitable permutation, combination, selection, etc. as would be understood by a person having ordinary skill in the art reading the present disclosure. In particular, leveraging a four-point algorithm and estimating homography transforms to facilitate content-based recognition and content-based reconstruction of image data are especially advantageous in preferred inventive concepts.

According to an embodiment of the inventive concepts presented hereinabove, a computer-implemented method of detecting an object depicted in a digital image includes any combination of the following operations and/or features: detecting a plurality of identifying features of the object, where the plurality of identifying features are located internally with respect to the object and detecting the plurality of identifying features comprises a multi-pass automatic feature zone discovery procedure; determining a position of some or all of the plurality of identifying features; identifying a plurality of distinctive pixels within the plurality of identifying features of the object; matching the digital image depicting the object to one of a plurality of reference images each depicting a known object type; designating as an outlier a candidate match between a distinctive pixel in the digital image and one or more candidate corresponding distinctive pixels present in one of the plurality of reference images, where the outlier is designated in response to either or both of: determining the candidate match is not unique; and determining a distance ratio is greater than a predetermined distance ratio threshold, where the distance ratio is a ratio describing: a first distance between the distinctive pixel in the digital image and a first of the one or more candidate corresponding distinctive pixels; and a second distance between the distinctive pixel in the digital image and a second of the one or more candidate corresponding distinctive pixels; and projecting a location of one or more edges of the object based at least in part on the plurality of identifying features; cropping the digital image based at least in part on the projected location of the one or more edges of the object, where the cropped digital image depicts a portion of a background of the digital image surrounding the object; detecting one or more transitions between the background and the object within the cropped digital image; classifying the object depicted within the cropped digital image, where the classifying optionally includes: attempting to detect the object within the digital image using a plurality of predetermined object detection models each corresponding to a known object type; and determining a classification of the object based on a result of attempting to detect the object within the digital image using the plurality of predetermined object detection models. The classification of the object is the known object type corresponding to one of the object detection models for which the attempt to detect the object within the digital image was successful. Of course, any of the specific features, inventive concepts, and/or operations set forth hereinabove as optional supplements, alternatives, or variations of the foregoing aspects may be included or substituted without departing from the scope of the inventive content-based detection embodiment set forth in this paragraph. Similarly, the embodiment may be implemented as a system or computer program product in various approaches.

In accordance with another embodiment, a computer-implemented method of reconstructing an object depicted in a digital image includes any combination of the following operations and/or features: detecting a plurality of identifying features of the object, wherein the plurality of identifying features are located internally with respect to the object; and reconstructing the digital image of the object within a three dimensional coordinate space based at least in part on some or all of the plurality of identifying features, where reconstructing the digital image of the object comprises transforming the object to represent dimensions of the object as viewed from an angle normal to the object, based at least in part on applying a four-point algorithm to at least some of the plurality of identifying features, preferably four of the plurality of identifying features which are randomly selected from among the plurality of identifying features; as such, reconstructing the digital image of the object may include estimating a homography transform $H$, where estimating $H$ comprises detecting one or more point correspondences $p_i \leftrightarrow P_i'$ with $p_i = (x_i, y_i, 1)^T$, and/or normalizing coordinates of some or all of the point correspondences; each point correspondence $p_i \leftrightarrow P_i'$ preferably corresponds to a position $p_i$ of one of the plurality of identifying features of the object, and a respective position $P_i'$ of a corresponding identifying feature of the reconstructed digital image of the object. Estimating the homography transform $H$ may involve an iterative process, in which case each iteration includes: randomly selecting four key points, each key point corresponding to one of the plurality of identifying features of the object; using the four point algorithm to estimate an $i^{th}$ homography transform $H_i$ based on the four key points; and applying the estimated $i^{th}$ homography transform $H_i$ to a set of corresponding key points, where the set of corresponding key points comprises a plurality of point correspondences, each point correspondence including: another key point corresponding to one of the plurality of identifying features of the object; and a corresponding key point from a reference image corresponding to the digital image. The method may also include determining one or more outlier key points from among each set of corresponding key points; identifying, from among each set of corresponding key points, the set of corresponding key points having a lowest number of outlier key points; defining a set of inlier key points from among the set of corresponding key points having the lowest number of outlier key points, the set of inlier key points excluding the outlier key points determined from among the set of corresponding key points having the lowest number of outlier key points; and estimating the homography transform $H$ based on the set of inlier key points; in which case determining the one or more outlier key points from among each set of corresponding key points preferably comprises: determining whether each of the plurality of point correspondences fits a transformation model corresponding to the estimated $i^{th}$ homography transform $H_i$; and, for each of the plurality of point correspondences, either: designating the other key point of the point correspondence as an outlier key point in response to determining the point correspondence does not fit the transformation model; or designating the other key point of the point correspondence as an inlier key point in response to determining the point correspondence does fit the transformation model. Preferably, the plurality of identifying features correspond to boilerplate content of the object; and at least one edge of the object is either obscured or missing from the digital image. The method of the present embodiment may also include cropping the reconstructed digital image of the object based at least in part on a projected location of one or more edges of the object within the reconstructed digital image, where the projected location of the one or more edges of the object is based at least in part on an estimated homography transform $H$; and/or classifying the reconstructed digital image of the object. Of course, any of the specific features, inventive concepts, and/or operations set forth hereinabove as optional supplements, alternatives, or variations of the foregoing aspects may be included or substituted without departing from the scope of the inventive content-based detection embodiment set forth in this paragraph. Similarly, the embodiment may be implemented as a system or computer program product in various approaches.

Finally, in yet another embodiment of the presently disclosed inventive concepts a computer-implemented method for detecting and reconstructing an object depicted in a digital image includes any combination of the following operations and/or features. With respect to detection, the method includes: detecting a plurality of identifying features of the object, where the plurality of identifying features are located internally with respect to the object and detecting the plurality of identifying features comprises a multi-pass automatic feature zone discovery procedure; determining a position of some or all of the plurality of identifying features; identifying a plurality of distinctive pixels within the plurality of identifying features of the object; matching the digital image depicting the object to one of a plurality of reference images each depicting a known object type; designating as an outlier a candidate match between a distinctive pixel in the digital image and one or more candidate corresponding distinctive pixels present in one of the plurality of reference images, where the outlier is designated in response to either or both of: determining the candidate match is not unique; and determining a distance ratio is greater than a predetermined distance ratio threshold, where the distance ratio is a ratio describing: a first distance between the distinctive pixel in the digital image and a first of the one or more candidate corresponding distinctive pixels; and a second distance between the distinctive pixel in the digital image and a second of the one or more candidate corresponding distinctive pixels; and projecting a location of one or more edges of the object based at least in part on the plurality of identifying features; cropping the digital image based at least in part on the projected location of the one or more edges of the object, where the cropped digital image depicts a portion of a background of the digital image surrounding the object; detecting one or more transitions between the background and the object within the cropped digital image; classifying the object depicted within the cropped digital image, where the classifying optionally includes: attempting to detect the object within the digital image using a plurality of predetermined object detection models each corresponding to a known object type; and determining a classification of the object based on a result of attempting to detect the object within the digital image using the plurality of predetermined object detection models. The classification of the object is the known object type corresponding to one of the object detection models for which the attempt to detect the object within the digital image was successful. With respect to reconstruction, the method includes: reconstructing the digital image of the object within a three dimensional coordinate space based at least in part on some or all of the plurality of identifying features, where reconstructing the digital image of the object comprises transforming the object to represent dimensions of the object as viewed from an angle normal to the object, based at least in part on applying a four-point algorithm to at least some of the plurality of identifying features, preferably four of the plurality of identifying features which are randomly selected from among the plurality of identifying features; as such, reconstructing the digital image of the object may include estimating a homography transform $H$, where estimating $H$ comprises detecting one or more point correspondences $p_i \leftrightarrow P_i'$ with $p_i = (x_i, y_i, 1)^T$, and/or normalizing coordinates of some or all of the point correspondences; each point correspondence $p_i \leftrightarrow P_i'$ preferably corresponds to a position $p_i$ of one of the plurality of identifying features of the object, and a respective position $P_i'$ of a corresponding identifying feature of the reconstructed digital image of the object. Estimating the homography transform $H$ may involve an iterative process, in which case each iteration includes: randomly selecting four key points, each key point corresponding to one of the plurality of identifying features of the object; using the four point algorithm to estimate an $i^{th}$ homography transform $H_i$ based on the four key points; and applying the estimated $i^{th}$ homography transform $H_i$ to a set of corresponding key points, where the set of corresponding key points comprises a plurality of point correspondences, each point correspondence including: another key point corresponding to one of the plurality of identifying features of the object; and a corresponding key point from a reference image corresponding to the digital image. The method may also include determining one or more outlier key points from among each set of corresponding key points; identifying, from among each set of corresponding key points, the set of corresponding key points having a lowest number of outlier key points; defining a set of inlier key points from among the set of corresponding key points having the lowest number of outlier key points, the set of inlier key points excluding the outlier key points determined from among the set of corresponding key points having the lowest number of outlier key points; and estimating the homography transform $H$ based on the set of inlier key points; in which case determining the one or more outlier key points from among each set of corresponding key points preferably comprises: determining whether each of the plurality of point correspondences fits a transformation model corresponding to the estimated $i^{th}$ homography transform $H_i$; and, for each of the plurality of point correspondences, either: designating the other key point of the point correspondence as an outlier key point in response to determining the point correspondence does not fit the transformation model; or designating the other key point of the point correspondence as an inlier key point in response to determining the point correspondence does fit the transformation model. Preferably, the plurality of identifying features correspond to boilerplate content of the object; and at least one edge of the object is either obscured or missing from the digital image. The method of the present embodiment may also include cropping the reconstructed digital image of the object based at least in part on a projected location of one or more edges of the object within the reconstructed digital image, where the projected location of the one or more edges of the object is based at least in part on an estimated homography transform $H$; and/or classifying the reconstructed digital image of the object. Of course, any of the specific features, inventive concepts, and/or operations set forth hereinabove as optional supplements, alternatives, or variations of the foregoing aspects may be included or substituted without departing from the scope of the inventive content-based detection embodiment set forth in this paragraph. Similarly, the embodiment may be implemented as a system or computer program product in various approaches.

While various embodiments, inventive concepts, and aspects thereof have been described above, it should be understood that they have been presented by way of example only, and not limitation. Thus, the breadth and scope of an inventive concept of the present invention should not be limited by any of the above-described exemplary inventive concepts.

**Claims**

1. A computer-implemented method (700) for using a mobile device to detect a document (500) depicted in a digital image, the method comprising:

   detecting (702) a plurality of identifying features (306) of the document (500), wherein the plurality of identifying features are located internally with respect to the document (500), wherein detecting the plurality of identifying features (306) comprises analyzing a plurality of feature vectors each corresponding to pixels within a patch of the digital image to determine whether the patch includes a sharp transition in intensity;
   identifying a plurality of distinctive pixels within the plurality of identifying features of the document (500), wherein the distinctive pixels are located in a patch exhibiting a rapid change in pixel intensity;
   matching the digital image depicting the document (500) to one of a plurality of reference images (400), each reference image depicting a known document type, wherein said matching comprises determining whether the document includes distinctive pixels that correspond to distinctive pixels present in one or more of the plurality of reference images; and
   determining whether a candidate match between a distinctive pixel in the digital image and a candidate corresponding distinctive pixel present in one of the plurality of reference images is unique, wherein a candidate match is determined to be unique if said distinctive pixel in the digital image and said candidate corresponding distinctive pixel present in said one of the plurality of reference images match each other but do not match any other distinctive pixels in said one of the plurality of reference images or said digital image respectively, and, in response to determining the candidate match is not unique, designating said candidate match as an outlier and removing the respective distinctive pixels from the matching process; and
   estimating (704) a location of one or more edges (502) of the document (500) based at least in part on the plurality of identifying features (306), by:

      estimating, using a Random Sample Consensus, RANSAC, algorithm, a transform defining a point-to-point correspondence between the document (500) depicted in the digital image and the known document type depicted in said matched one of the plurality of reference images (400); and
      estimating the location of one or more edges (502) of the document (500) depicted in the digital image based on one or more corresponding edge locations determined from the matched one of the plurality of reference images (400), via said transform.

2. The computer-implemented method (700) as recited in claim 1, comprising determining a position of some or all of the plurality of identifying features (306).

3. The computer-implemented method (700) as recited in claim 1 or claim 2,

   comprising designating as a further outlier a candidate match between a distinctive pixel in the digital image and one or more candidate corresponding distinctive pixels present in one of the plurality of reference images;
   wherein the further outlier is designated in response to determining a distance ratio is greater than a predetermined distance ratio threshold, wherein the distance ratio is a ratio describing:

      a first distance between the distinctive pixel in the digital image and a first one of the one or more candidate corresponding distinctive pixels; and
      a second distance between the distinctive pixel in the digital image and a second one of the one or more candidate corresponding distinctive pixels.

4. The computer-implemented method (700) as recited in any one of claims l to 3, wherein at least a portion of one or more edges of the document (500) for which the location is projected is either obscured or missing in the digital image.

**5.** The computer-implemented method (700) as recited in any one of claims l to 4, further comprising:
cropping the digital image based at least in part on the estimated location of the one or more edges (502) of the document (500), comprising:

cropping the digital image directly at the estimated locations of the one or more edges, or
cropping the digital image to obtain a cropped digital image depicting a portion of a background depicted in the digital image surrounding the document.

**6.** The computer-implemented method (700) as recited in claim 5,

wherein the cropped digital image depicts a portion of the background depicted in the digital image surrounding the document; and
wherein the method comprises detecting one or more transitions between the background and the document within the digital image.

**7.** The computer-implemented method (700) as recited in claim 5 or claim 6, comprising:
classifying the document depicted within the cropped digital image.

**8.** The computer-implemented method (700) as recited in any one of claims 1 to 7, comprising:

generating a plurality of scaled images based on the digital image, each scaled image being **characterized by** a different resolution;
extracting one or more feature vectors from each scaled image; and
matching one or more of the scaled images to one of the plurality of reference images (400), each reference image depicting a known document type and being **characterized by** a known resolution.

**9.** The computer-implemented method (700) as recited in any one of claims 1 to 8, comprising:

attempting to detect the document (500) within the digital image using a plurality of predetermined document detection models each corresponding to a known document type; and
determining a classification of the document based on a result of attempting to detect the document within the digital image using the plurality of predetermined document detection models; and
wherein the determined classification of the document is the known document type corresponding to one of the document detection models for which the attempt to detect the document within the digital image was successful.

**10.** The computer-implemented method (700) as recited in any one of the preceding claims,
wherein the document comprises: a rectangular document, a sheet of paper of standard size, a business card, a form, an identification document, a passport, a driver license or other license, a social security card, a credit or debit card, a check, a receipt, or an invoice.

**11.** The computer-implemented method (700) as recited in any one of the preceding claims, wherein: the Random Sample Consensus, RANSAC, algorithm is a four-point algorithm.

**12.** . A computer program product for detecting a document (500) depicted in a digital image, comprising a computer readable medium having stored thereon computer readable program instructions configured to cause a processor (210), upon execution thereof, to perform the operations included in any of claims 1 to 11.

**13.** A system (114, 116) for detecting a document (500) depicted in a digital image, comprising a processor (210) and logic embodied with and/or executable by the processor, the logic being configured to cause the processor, upon execution thereof, to perform the operations included in any of claims 1 to 11.


**Patentansprüche**

**1.** Ein computerimplementiertes Verfahren (700) zur Verwendung einer mobilen Vorrichtung, um ein Dokument (500) zu detektieren, das in einem digitalen Bild dargestellt wird, wobei das Verfahren Folgendes beinhaltet:

Detektieren (702) einer Vielzahl von identifizierenden Merkmalen (306) des Dokuments (500), wobei die Vielzahl von identifizierenden Merkmalen mit Bezug auf das Dokument (500) intern lokalisiert sind, wobei das Detektieren der Vielzahl von identifizierenden Merkmalen (306) das Analysieren einer Vielzahl von Merkmalsvektoren beinhaltet, von denen jeder Pixeln innerhalb einer Teilfläche des digitalen Bilds entspricht, um zu bestimmen, ob die Teilfläche einen scharfkantigen Übergang in der Intensität umfasst;

Identifizieren einer Vielzahl von distinktiven Pixeln innerhalb der Vielzahl von identifizierenden Merkmalen des Dokuments (500), wobei die distinktiven Pixel in einer Teilfläche lokalisiert sind, die einen schnellen Wechsel in der Pixelintensität zeigt;

Anpassen des digitalen Bilds, das das Dokument (500) darstellt, an eines einer Vielzahl von Referenzbildern (400), wobei jedes Referenzbild einen bekannten Dokumenttyp darstellt, wobei das Anpassen das Bestimmen beinhaltet, ob das Dokument distinktive Pixel umfasst, die distinktiven Pixeln entsprechen, die in einem oder mehreren der Vielzahl von Referenzbildern vorhanden sind; und

Bestimmen, ob eine Kandidatenanpassung zwischen einem distinktiven Pixel in dem digitalen Bild und einem Kandidaten, der einem distinktivem Pixel, das in einem der Vielzahl von Referenzbildern vorhanden ist, entspricht, eindeutig ist, wobei eine Kandidatenanpassung bestimmt wird, um eindeutig zu sein, wenn das distinktive Pixel in dem digitalen Bild und der Kandidat, der dem distinktivem Pixel entspricht, das in dem einen der Vielzahl von Referenzbildern vorhanden ist, zueinander passt, aber nicht zu anderen distinktiven Pixeln in dem einen der Vielzahl von Referenzbildern bzw. dem digitalen Bild passt, und als Reaktion auf das Bestimmen, dass die Kandidatenanpassung nicht eindeutig ist, Designieren der Kandidatenanpassung als einen Ausreißer und Entfernen der jeweiligen eindeutigen Pixel aus dem Anpassungsprozess; und

Schätzen (704) einer Lokation einer oder mehrerer Kanten (502) des Dokuments (500) basierend mindestens teilweise auf der Vielzahl von identifizierenden Merkmalen (306) durch Folgendes:

Schätzen, unter Verwendung eines Random-Sample-Consensus-Algorithmus, ANSAC-Algorithmus, einer Transformation, die eine Punkt-zu-Punkt-Korrespondenz zwischen dem Dokument (500), das in dem digitalen Bild dargestellt ist, und dem bekannten Dokumenttyp, der in dem angepassten der Vielzahl von Referenzbildern (400) dargstellt ist, definiert; und

Schätzen der Lokation einer oder mehrerer Kanten (502) des Dokuments (500), das in dem digitalen Bild basierend auf einer oder mehreren entsprechenden Kantenlokationen, die von dem einen angepassten der Vielzahl von Referenzbildern (400) über die Transformation bestimmt werden, dargestellt ist.

2. Computerimplementiertes Verfahren (700) gemäß Anspruch 1, das das Bestimmen einer Position einiger oder aller der Vielzahl von identifizierenden Merkmalen (306) beinhaltet.

3. Computerimplementiertes Verfahren (700) gemäß Anspruch 1 oder Anspruch 2,

das das Designieren als einen weiteren Ausreißer einer Kandidatenanpassung zwischen einem distinktiven Pixel in dem digitalen Bild und einem oder mehreren Kandidaten, die distinktiven Pixeln entsprechen, die in einem der Vielzahl von Referenzbildern vorhanden sind;

wobei der weitere Ausreißer als Reaktion auf das Bestimmen designiert wird, dass ein Distanzverhältnis größer als ein vorbestimmter Distanzverhältnisschwellenwert ist, wobei das Distanzverhältnis ein Verhältnis ist, das Folgendes beschreibt:

eine erste Distanz zwischen dem distinktiven Pixel in dem digitalen Bild und einem ersten einen des einen oder der mehreren Kandidaten, die distinktiven Pixeln entsprechen; und

eine zweite Distanz zwischen dem distinktiven Pixel in dem digitalen Bild und einem zweiten einen des einen oder der mehreren Kandidaten, die distinktiven Pixeln entsprechen.

4. Computerimplementiertes Verfahren (700) gemäß einem der Ansprüche 1 bis 3, wobei mindestens ein Abschnitt der einen oder der mehreren Kanten des Dokuments (500), für das die Lokation projiziert ist, entweder verdunkelt ist oder in dem digitalen Bild fehlt.

5. Computerimplementiertes Verfahren (700) gemäß einem der Ansprüche 1 bis 4, das ferner Folgendes beinhaltet: Beschneiden des digitalen Bilds basierend mindestens teilweise auf der geschätzten Lokation der einen oder der mehreren Kanten /502) des Dokuments (500), Folgendes beinhaltend:

Beschneiden des digitalen Bilds direkt an den geschätzten Lokationen der einem oder der mehreren Kanten, oder

Beschneiden des digitalen Bilds, um ein beschnittenes digitales Bild zu erhalten, das einen Abschnitt eines Hintergrunds darstellt, der in dem digitalen Bild dargestellt wird, das das Dokument umgibt.

6. Computerimplementiertes Verfahren (700) gemäß Anspruch 5,

wobei das beschnittene digitale Bild einen Abschnitt des Hintergrunds darstellt, der in dem digitalen Bild dargestellt wird, das das Dokument umgibt; und
wobei das Verfahren das Detektieren eines oder mehrerer Übergänge zwischen dem Hintergrund und dem Dokument innerhalb des digitalen Bilds beinhaltet.

7. Computerimplementiertes Verfahren (700) gemäß Anspruch 5 oder Anspruch 6, das Folgendes beinhaltet: Klassifizieren des Dokuments, das innerhalb des beschnittenen digitalen Bilds dargestellt ist.

8. Computerimplementiertes Verfahren (700) gemäß einem der Ansprüche 1 bis 7, das Folgendes beinhaltet:

Erzeugen einer Vielzahl von skalierten Bildern basierend auf dem digitalen Bild, wobei jedes skalierte Bild durch eine unterschiedliche Auflösung gekennzeichnet ist;
Extrahieren eines oder mehrerer Merkmalsvektoren von jedem skalierten Bild; und
Anpassen eines oder mehrerer der skalierten Bilder an eines der Vielzahl von Referenzbildern (400), wobei jedes Referenzbild einen bekannten Dokumenttyp darstellt und durch eine bekannte Auflösung gekennzeichnet ist.

9. Computerimplementiertes Verfahren (700) gemäß einem der Ansprüche 1 bis 8, das Folgendes beinhaltet:

Versuchen des Detektierens des Dokuments (500) innerhalb des digitalen Bilds unter Verwendung einer Vielzahl von vorbestimmten Dokumentdetektionsmodellen, von denen jedes einem bekannten Dokumenttyp entspricht; und
Bestimmen einer Klassifizierung des Dokuments basierend auf einem Ergebnis des Versuchens, das Dokument innerhalb des digitalen Bilds unter Verwendung der Vielzahl von vorbestimmten Dokumentdetektionsmodellen zu detektieren; und
wobei die vorbestimmte Klassifizierung des Dokuments der bekannte Dokumenttyp ist, der einem der Dokumentdetektionsmodelle entspricht, für das der Versuch, das Dokument innerhalb des digitalen Bilds zu detektieren, erfolgreich war.

10. Computerimplementiertes Verfahren (700) gemäß einem der vorhergehenden Ansprüche,
wobei das Dokument Folgendes beinhaltet: ein rechtwinkliges Dokument, ein Blatt Papier von Standardgröße, eine Visitenkarte, ein Formular, ein Identifikationsdokument, einen Pass, eine Fahrerlaubnis oder eine andere Erlaubnis, eine Sozialversicherungskarte, eine Kredit- oder Guthabenkarte, einen Check, eine Quittung oder eine Rechnung.

11. Computerimplementiertes Verfahren (700) gemäß einem der vorhergehenden Ansprüche, wobei:
der Random-Sample-Consensus-Algorithmus, ANSAC-Algorithmus, ein Vier-Punkt-Algorithmus ist.

12. Ein Computerprogrammprodukt zum Detektieren eines Dokuments (500), das in einem digitalen Bild dargestellt ist, das ein durch einen Computer lesbares Medium beinhaltet, das darauf gespeichert computerlesbare Programmanweisungen aufweist, die konfiguriert sind, um zu bewirken, dass ein Prozessor (210) bei Ausführug davon die in den Ansprüchen 1 bis 11 umfassten Operationen durchführt.

13. Ein System (114, 116) zum Detektieren eines Dokuments (500), das in einem digitalen Bild dargestellt ist, das einen Prozessor (210) und Logik beinhaltet, die in diesem enthalten und/oder durch diesen ausführbar ist, wobei die Logik konfiguriert ist, um zu bewirken, dass der Prozessor bei Ausführung davon die Operationen durchführt, die in den Ansprüchen 1 bis 11 umfasst sind.

**Revendications**

1. Un procédé mis en œuvre par ordinateur (700) pour l'utilisation d'un dispositif mobile pour détecter un document (500) représenté dans une image numérique, le procédé comprenant :

la détection (702) d'une pluralité d'attributs d'identification (306) du document (500), la pluralité d'attributs d'identification étant situés de manière interne par rapport au document (500), la détection de la pluralité d'attributs d'identification (306) comprenant l'analyse d'une pluralité de vecteurs d'attributs correspondant chacun à des pixels au sein d'un carreau de l'image numérique afin de déterminer si le carreau inclut une transition nette d'intensité ;

l'identification d'une pluralité de pixels distinctifs au sein de la pluralité d'attributs d'identification du document (500), les pixels distinctifs étant situés dans un carreau présentant un changement rapide d'intensité de pixels ;

la mise en concordance de l'image numérique représentant le document (500) avec une image d'une pluralité d'images de référence (400), chaque image de référence représentant un type de document connu, ladite mise en concordance comprenant la détermination quant à savoir si le document inclut des pixels distinctifs qui correspondent à des pixels distinctifs présents dans une ou plusieurs images de la pluralité d'images de référence ; et

la détermination quant à savoir si une concordance candidate entre un pixel distinctif dans l'image numérique et un pixel distinctif correspondant candidat présent dans une image de la pluralité d'images de référence est unique, une concordance candidate étant déterminée comme étant unique si ledit pixel distinctif dans l'image numérique et ledit pixel distinctif correspondant candidat présent dans ladite image de la pluralité d'images de référence concordent l'un avec l'autre mais ne concordent avec aucun autre pixel distinctif dans ladite image de la pluralité d'images de référence ou ladite image numérique respectivement, et, en réponse à la détermination que la concordance candidate n'est pas unique, la désignation de ladite concordance candidate comme aberrance et l'élimination des pixels distinctifs respectifs du processus de mise en concordance ; et

l'estimation (704) d'un emplacement d'un ou de plusieurs bords (502) du document (500) sur la base au moins en partie de la pluralité d'attributs d'identification (306), par :

estimation, en utilisant un algorithme de consensus d'échantillon aléatoire, RANSAC, d'une transformée définissant une correspondance point à point entre le document (500) représenté dans l'image numérique et le type de document connu représenté dans ladite image mise en concordance de la pluralité d'images de référence (400) ; et

estimation de l'emplacement d'un ou de plusieurs bords (502) du document (500) représenté dans l'image numérique sur la base d'un ou de plusieurs emplacements de bord correspondants déterminés à partir de l'image mise en concordance de la pluralité d'images de référence (400), par l'intermédiaire de ladite transformée.

2. Le procédé mis en œuvre par ordinateur (700) tel qu'énoncé dans la revendication 1, comprenant la détermination d'une position de certains attributs ou de la totalité des attributs de la pluralité d'attributs d'identification (306).

3. Le procédé mis en œuvre par ordinateur (700) tel qu'énoncé dans la revendication 1 ou la revendication 2,

comprenant la désignation comme aberrance supplémentaire d'une concordance candidate entre un pixel distinctif dans l'image numérique et un ou plusieurs pixels distinctifs correspondants candidats présents dans une image de la pluralité d'images de référence ;

dans lequel l'aberrance supplémentaire est désignée en réponse à la détermination qu'un rapport de distance est supérieur à un seuil de rapport de distance prédéterminé, le rapport de distance étant un rapport décrivant :

une première distance entre le pixel distinctif dans l'image numérique et un premier pixel parmi les un ou plusieurs pixels distinctifs correspondants candidats ; et

une deuxième distance entre le pixel distinctif dans l'image numérique et un deuxième pixel parmi les un ou plusieurs pixels distinctifs correspondants candidats.

4. Le procédé mis en œuvre par ordinateur (700) tel qu'énoncé dans l'une quelconque des revendications 1 à 3, dans lequel au moins une portion d'un ou de plusieurs bords du document (500) pour lesquels l'emplacement est projeté est soit occultée, soit manquante dans l'image numérique.

5. Le procédé mis en œuvre par ordinateur (700) tel qu'énoncé dans l'une quelconque des revendications 1 à 4, comprenant en outre :

le rognage de l'image numérique sur la base au moins en partie de l'emplacement estimé des un ou plusieurs bords (502) du document (500), comprenant :

le rognage de l'image numérique directement au niveau des emplacements estimés des un ou plusieurs bords, ou

le rognage de l'image numérique afin d'obtenir une image numérique rognée représentant une portion d'un arrière-plan représenté dans l'image numérique entourant le document.

6. Le procédé mis en œuvre par ordinateur (700) tel qu'énoncé dans la revendication 5,

dans lequel l'image numérique rognée représente une portion de l'arrière-plan représenté dans l'image numérique entourant le document ; et
le procédé comprenant la détection d'une ou de plusieurs transitions entre l'arrière-plan et le document au sein de l'image numérique.

7. Le procédé mis en œuvre par ordinateur (700) tel qu'énoncé dans la revendication 5 ou la revendication 6, comprenant :
la classification du document représenté au sein de l'image numérique rognée.

8. Le procédé mis en œuvre par ordinateur (700) tel qu'énoncé dans l'une quelconque des revendications 1 à 7, comprenant :

la génération d'une pluralité d'images mises à l'échelle sur la base de l'image numérique, chaque image mise à l'échelle étant **caractérisée par** une résolution différente ;
l'extraction, de chaque image mise à l'échelle, d'un ou de plusieurs vecteurs d'attributs ; et
la mise en concordance d'une ou de plusieurs des images mises à l'échelle avec une image de la pluralité d'images de référence (400), chaque image de référence représentant un type de document connu et étant **caractérisée par** une résolution connue.

9. Le procédé mis en œuvre par ordinateur (700) tel qu'énoncé dans l'une quelconque des revendications 1 à 8, comprenant :

la tentative de détecter le document (500) au sein de l'image numérique en utilisant une pluralité de modèles de détection de document prédéterminés correspondant chacun à un type de document connu ; et
la détermination d'une classification du document sur la base d'un résultat de la tentative de détecter le document au sein de l'image numérique en utilisant la pluralité de modèles de détection de document prédéterminés ; et
dans lequel la classification déterminée du document est le type de document connu correspondant à l'un des modèles de détection de document pour lequel la tentative de détecter le document au sein de l'image numérique a été réussie.

10. Le procédé mis en œuvre par ordinateur (700) tel qu'énoncé dans l'une quelconque des revendications précédentes, dans lequel le document comprend : un document rectangulaire, une feuille de papier de taille standard, une carte de visite professionnelle, un formulaire, un document d'identification, un passeport, un permis de conduire ou autre permis, une carte de sécurité sociale, une carte de crédit ou de débit, un chèque, un reçu, ou une facture.

11. Le procédé mis en œuvre par ordinateur (700) tel qu'énoncé dans l'une quelconque des revendications précédentes, dans lequel :
l'algorithme de consensus d'échantillon aléatoire, RANSAC, est un algorithme à quatre points.

12. Un produit-programme d'ordinateur pour la détection d'un document (500) représenté dans une image numérique, comprenant un support lisible par ordinateur sur lequel sont stockées des instructions de programme lisibles par ordinateur configurées, sitôt exécutées, pour amener un processeur (210) à effectuer les opérations incluses dans n'importe lesquelles des revendications 1 à 11.

13. Un système (114, 116) pour la détection d'un document (500) représenté dans une image numérique, comprenant un processeur (210) et une logique incorporée dans et/ou exécutable par le processeur, la logique étant configurée, sitôt exécutée, pour amener le processeur à effectuer les opérations incluses dans n'importe lesquelles des revendications 1 à 11.

**FIG. 1**

FIG. 2

FIG. 3A

FIG. 3B

FIG. 3C

FIG. 4A

FIG. 4B

400

410

## FIG. 4C

$\partial_W$

504

$\partial_H$

502

500

1234 5678 9012 3456

Jane Doe    EXP MM/YY

## FIG. 5

z

Θ = 0°

y (into page)

x

z

Θ = 0°

x (into page)

y

## FIG. 6A

y

x

z (into page)

Θ = 90°

ΔΘ = 0°

## FIG. 6B

y

x

$\Theta_2$

$\Theta_1$

$\Theta_1 = 80°$,
$\Theta_2 = 100°$
$\Delta_\Theta = 10°$

z

$\Delta_\Theta$

$\Theta_1$

$\Theta_2$

y

## FIG. 6C

y

x

$\Theta_2$

$\Theta_1$

$\Theta_1 \leq 60°$,
$\Theta_2 \geq 120°$

$\Delta_\Theta \geq 30°$

z

$\Delta_\Theta$

$\Theta_1$

$\Theta_2$

y

## FIG. 6D

700 ⤵

```
Detect a plurality of identifying features of an object depicted in a
digital image, where the plurality of identifying features are located
internally with respect to the object
```
702

```
Project a location of one or more edges of the object based at least in
part on the plurality of identifying features
```
704

## FIG. 7

800 ⤵

```
Detect a plurality of identifying features of an object depicted in a
digital image, where the plurality of identifying features are located
internally with respect to the object
```
802

```
Reconstruct the digital image of the object within a three dimensional
coordinate space based at least in part on some or all of the plurality
of identifying features
```
804

## FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 23496916 A
- US 62317360 A
- US 234993 A
- US 15732516 A
- US 14818196 B
- US 14981759 B
- US 14932902 B
- US 2014032406 A1
- US 8855375 B, Macciola
- US 80222613 A

**Non-patent literature cited in the description**

- **RICHARD SZELISKI**. Computer Vision: Algorithms and Applications. Springer, 03 September 2010